# EUROPEAN PATENT APPLICATION

(11) **EP 2 763 110 A1**
(43) Date of publication of application: **06.08.2014**
(21) Application number: 12836370.2
(22) Date of filing: 21.09.2012
(51) Int. Cl.: G07G 1/00, G07D 9/00

(54) **CASH REGISTER SYSTEM**

(30) Priority: 27.09.2011 JP 2011210828; 28.10.2011 JP 2011237598
(71) Applicant: Glory Ltd., Himeji-shi, Hyogo 670-8567 (JP)
(72) Inventor: TAGASHIRA, Kenichi, Himeji-shi, Hyogo-Ken (JP); DOI, Kazuhiro, Himeji-Shi, Hyogo-Ken (JP); HIGASHIYAMA, Minoru, Himeji-Shi, Hyogo-Ken (JP)
(74) Representative: Schwabe - Sandmair - Marx
(86) International application number: PCT/JP2012/074158
(87) International publication number: WO 2013/047344

(57) **Abstract**

In a register system in which a plurality of register units including a register and a money settlement device is provided, the plurality of register units includes a base unit and a terminal unit. A money settlement device of the base unit includes a money storing unit arranged in a safe, an interior of which only a person having specific authority is allowed to access. In addition, the base unit is configured to perform a replenishing process and a collecting process with respect to the terminal unit.

## Description

### TECHNICAL FIELD

The present invention relates to a register system in which a plurality of register units including a register and a money settlement device is provided.

The present invention relates to a register system provided with a register, a banknote depositing and dispensing device that performs a deposit process and a dispensing process of banknotes, and a coin depositing and dispensing device that performs a deposit process and a dispensing process of coins.

### BACKGROUND ART

A register system in which a plurality of register units including a point of sales (POS) register and a money settlement device is provided is installed in stores such as supermarkets, convenience stores, and the like. Here, as the money settlement device, a money change machine made of a banknote change machine and a coin change machine has been used, for example. Further, conventionally, a base-terminal type register system that treats one of a plurality of register units as a base unit and other register units as terminal units is known. For example, Patent No. 2715174 discloses a method of installing a plurality of electronic cash registers or POS registers in a store, causing a register of a terminal (slave) machine to be communicably connected to a register of a base (master) machine, and managing, by the register of the base machine, data used in the register of the terminal machine. Further, Japanese Patent Application Laid-Open No. 11-110648 discloses a POS system in which a slave machine as a POS terminal and a master machine communicably connected to the slave machine are provided, and the master machine collectively manages sales data as tanking data, whereby an efficient operation is performed.

A register system made of a point of sales (POS) register and a money depositing and dispensing device is installed in a store such as a supermarket. Here, the money depositing and dispensing device is configured from a banknote depositing and dispensing device that performs a deposit process and a dispensing process of banknotes, and a coin depositing and dispensing device that performs a deposit process and a dispensing process of coins. Conventionally, one money depositing and dispensing device is provided in one-to-one correspondence with one register. To be specific, one banknote depositing and dispensing device and one coin depositing and dispensing device are communicably connected to one register (for example, see Japanese Patent No. 3803202). Further, Japanese Utility Model No. 2603807 and Japanese Patent No. 3578868 disclose a register settlement system in which registration of a purchased product is performed by a POS register in a store, and the customer performs a settlement process in a different place from the POS register.

### SUMMARY OF THE INVENTION

By the way, in a register system in which a plurality of register units is provided, there is a problem that, when money storing units in money settlement devices of all of the register units are installed in a safe having high security, installation of such a safe costs a lot of money, which leads to an increase in cost as the entire system.

Further, in the conventional register system, even if one register unit among a plurality of register units is treated as a base unit and other register units are treated as terminal units, the register units are not ones in which money settlement devices are used, but ones that manage cash with drawers. Therefore, the replenishing process of replenishing money stored in the money settlement device of the base unit to the money settlement devices of the terminal units, and the collecting process of collecting the money stored in the money settlement devices of the terminal units and storing the money in the money settlement device of the base unit have not been performed between the base unit and the terminal units. Therefore, even in the base-terminal type register system, there is a problem in that change replenishing work with respect to each money settlement device before start of business of a store, and money collecting work from each money settlement device after end of business of the store cannot efficiently be performed.

The present invention has been made in view of the foregoing, and the object of the present invention is to provide a register system that enables reduction in cost, compared with a case in which money storing units of all of the money settlement devices are installed in a safe, by installing only a money storing unit of a money settlement device of a base unit in a safe, an interior of which can be accessed only by a person having specific authority, and that is capable of performing a safe money handling process by performing a settlement process mainly by the money settlement device of the base unit during an off-season period. Further, another objective of the present invention is to provide a register system capable of efficiently performing change replenishing work with respect to each money settlement device before start of business of a store, and money collecting work from each money settlement device after end of business of the store, by performing a replenishing process and a collecting process by the base unit with respect to a terminal unit.

A register system of the present invention is a register system in which a plurality of register units including a register and a money settlement device is provided, wherein the plurality of register units includes a base unit and a terminal unit, and a money settlement device of the base unit includes a money storing unit arranged in a safe, an interior of which only a person having specific authority is allowed to access.

According to such a register system, the cost can be reduced, compared with a case in which money storing units of all of the money settlement devices are installed in a safe, by installing only a money storing unit of a money settlement device of a base unit in a safe, an interior of which can be accessed only by a person having specific authority. Further, banknotes received from the customer can be safely managed by performing a settlement process mainly by the money settlement device of the base unit during an off-season period.

In the register system of the present invention, the amount of money stored in the money settlement device of the base unit may be larger than that in the money settlement device of the terminal unit.

Another register system of the present invention is a register system in which a plurality of register units including a register and a money settlement device is provided, wherein the plurality of register units includes a base unit and a terminal unit, and the base unit performs, with respect to the terminal unit, a replenishing process of replenishing money stored in a money settlement device of the base unit to a money settlement device of the terminal unit, and a collecting process of collecting money stored in the money settlement device of the terminal unit and storing the money in the money settlement device of the base unit.

According to such a register system, the change replenishing work with respect to the money settlement device of the terminal unit before start of business of a store, and the money collecting work from the money settlement device of the terminal unit after end of business of the store can be efficiently performed, by performing the replenishing process and the collecting process by the base unit with respect to the terminal unit.

In the register system of the present invention, a management device may be further provided, which is communicably connected with the base unit and the terminal unit, and configured to manage the balance of the money settlement device of the base unit and the balance of the money settlement device of the terminal unit.

In the register system of the present invention, the base unit may be communicably connected to an ATM network of a bank.

At this time, when the money is dispensed from the money settlement device of the base unit, dispensing information of the money can be transmitted from the base unit to the ATM network of the bank.

Further, when the replenishing process of replenishing the money stored in the money settlement device of the base unit to the money settlement device of the terminal unit is performed, dispensing information of the money dispensed from the money settlement device of the base unit may be transmitted from the base unit to the ATM network of the bank.

Further, when the collecting process of collecting the money stored in the money settlement device of the terminal unit, and storing the money in the money settlement device of the base unit is performed, deposit information of the money deposited in the money settlement device of the base unit may be transmitted from the base unit to the ATM network of the bank.

In the register system of the present invention, the money stored in the money settlement device of the base unit may be under management authority of a bank.

According to the register system of the present invention, the cost can be reduced, compared with a case in which money storing units of all of the money settlement devices are installed in a safe, and a safe money handling process can be performed by performing the settlement process mainly in the money settlement device of the base unit during an off-season period.

Further, according to another register system of the present invention, the change replenishing work with respect to each money settlement device before start of business of a store and the money collecting work from each money settlement device after end of business of the store can be efficiently performed by performing the replenishing process and the collecting process by the base unit with respect to the terminal units.

Next, typically, a banknote depositing and dispensing device installed in a conventional register system has high security but costs relatively high. Therefore, a conventional register system disclosed in Patent No. 3803202 has a problem in that the enormous cost incurs for introduction of the register system when the banknote depositing and dispensing devices are arranged in one-to-one correspondence with all of POS registers. Further, a register settlement system disclosed in Japanese Utility Model No. 2603807 or Japanese Patent No. 3578868 has problems in that construction of a large-scale system is required for development of a cash settlement terminal, and cost performance is poor.

The present invention has been made in view of the foregoing, and the object of the present invention is to provide a register system capable of decreasing the number of installed banknote depositing and dispensing devices and thus reducing the cost of introduction, compared with a case in which the banknote depositing and dispensing devices are installed in one-to-one correspondence with all of registers, by providing a plurality of coin depositing and dispensing devices corresponding to the registers, and providing a less number of banknote depositing and dispensing devices than the number of registers so that the banknote depositing and dispensing devices are used by the plurality of registers in common.

The present invention is a register system including a plurality of registers, a banknote depositing and dispensing device that performs a deposit process and a dispensing process of banknotes, and a coin depositing and dispensing device that performs a deposit process and a dispensing process of coins, in which a plurality of coin depositing and dispensing devices is provided corresponding to the registers, and a less number of banknote depositing and dispensing devices than the number of registers is installed so as to be used by the plurality of registers in common.

According to such a register system, a plurality of coin depositing and dispensing devices is provided corresponding to the registers, and a less number of banknote depositing and dispensing devices than the number of registers is installed so as to be 0used by the plurality of registers in common. Therefore, the number of installed banknote depositing and dispensing devices can be decreased, compared with a case in which the banknote depositing and dispensing devices are arranged in one-to-one correspondence with all of the registers, and thus the cost of introduction of the register system can be reduced.

In the register system of the present invention, only one banknote depositing and dispensing device may be installed in the register system.

In the register system of the present invention, the coin depositing and dispensing device may be arranged facing a customer side, and the banknote depositing and dispensing device may be arranged facing a clerk side.

At this time, the banknote depositing and dispensing device includes a banknote storing unit that stores banknotes taken into an interior from an outside of the device by the deposit process, and the banknote storing unit may be arranged in a safe, an interior of which can be accessed only by a person having specific authority.

In the register system of the present invention, the banknote depositing and dispensing device is occupied exclusively by each register, and only after proceeds of one transaction are confirmed in one register, an occupied state may be made by the one register.

In the register system of the present invention, a management device may be further provided, which is communicably connected with each of the register, the banknote depositing and dispensing device, and the coin depositing and dispensing device, and manages the proceeds of each transaction calculated by the register, the balance of the banknote depositing and dispensing device, and the balance of the coin depositing and dispensing device.

At this time, the management device may manage the proceeds of each transaction calculated by the register, by treating a plurality of registers that shares the banknote depositing and dispensing device and a plurality of coin depositing and dispensing devices provided corresponding to the registers, as one group.

Further, the management device may cause only one register among the plurality of registers to manage the balance and/or state of the banknote depositing and dispensing device.

According to the register system of the present invention, the number of installed banknote depositing and dispensing devices can be decreased, compared with a case in which the banknote depositing and dispensing devices are arranged in one-to-one correspondence with all of the registers, and thus the cost of introduction can be reduced.

### BRIEF DESCRIPTION OF THE DRAWINGS

Fig. 1 is a top view illustrating an outline of a configuration of a register system according to an embodiment of the present invention;
Fig. 2 is a schematic functional block diagram of the register system illustrated in Fig. 1 and the like;
Figs. 3(a) and 3(b) are side views illustrating internal configurations of a banknote depositing and dispensing machine in a base unit of the register system illustrated in Fig. 1 and the like;
Fig. 4 is a side view illustrating an internal configuration of a banknote depositing and dispensing machine in a terminal unit of the register system illustrated in Fig. 1 and the like;
Fig. 5 is a side view illustrating an internal configuration of a coin depositing and dispensing machine of a base unit and of a terminal unit in the register system illustrated in Fig. 1 and the like;
Fig. 6 is a front view illustrating an internal configuration of the coin depositing and dispensing machine illustrated in Fig. 5;
Fig. 7 is a diagram for describing an operation in which an ATM dispensing is performed from the banknote depositing and dispensing machine of the base unit of the register system illustrated in Fig. 1, and the like;
Fig. 8 is a diagram for describing an operation of a replenishing process of replenishing banknotes stored in the banknote depositing and dispensing machine of the base unit of the register system illustrated in Fig. 1 and the like, to the banknote depositing and dispensing machine of the terminal unit as reserved supply of money;
Fig. 9 is a diagram for describing an operation of a collecting process of collecting banknotes stored in the banknote depositing and dispensing machine of the terminal unit of the register system illustrated in Fig. 1 and the like, and storing the banknotes in the banknote depositing and dispensing machine of the base unit;
Fig. 10 is a top view illustrating an overview of a configuration of a register system according to a next embodiment of the present invention;
Fig. 11 is an explanatory diagram illustrating movement of banknotes and coins in the register system illustrated in Fig. 10;
Fig. 12 is a schematic functional block diagram of the register system illustrated in Fig. 10 and the like;
Fig. 13 is a side view illustrating an internal configuration of a banknote depositing and dispensing device provided in the register system illustrated in Fig. 10 and the like;
Fig. 14 is a side view illustrating an internal configuration of a coin depositing and dispensing device provided in the register system illustrated in Fig. 10 and the like;
Fig. 15 is a front view of the coin depositing and dispensing device illustrated in Fig. 14;
Figs. 16(a) and 16(b) are diagrams for describing a mechanism of balance management of each depositing and dispensing device by a balance management terminal in the register system illustrated in Fig. 10 and the like;
Fig. 17 is a sequence diagram in ordinary business in the register system illustrated in Fig. 10 and the like; and
Fig. 18 is a top view illustrating an outline of another configuration of a register system of a next embodiment of the present invention.

### MODE FOR CARRYING OUT THE INVENTION

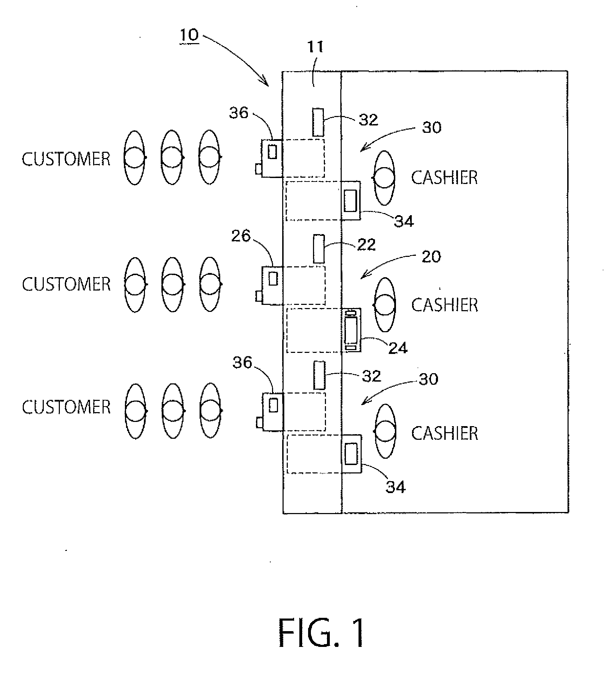

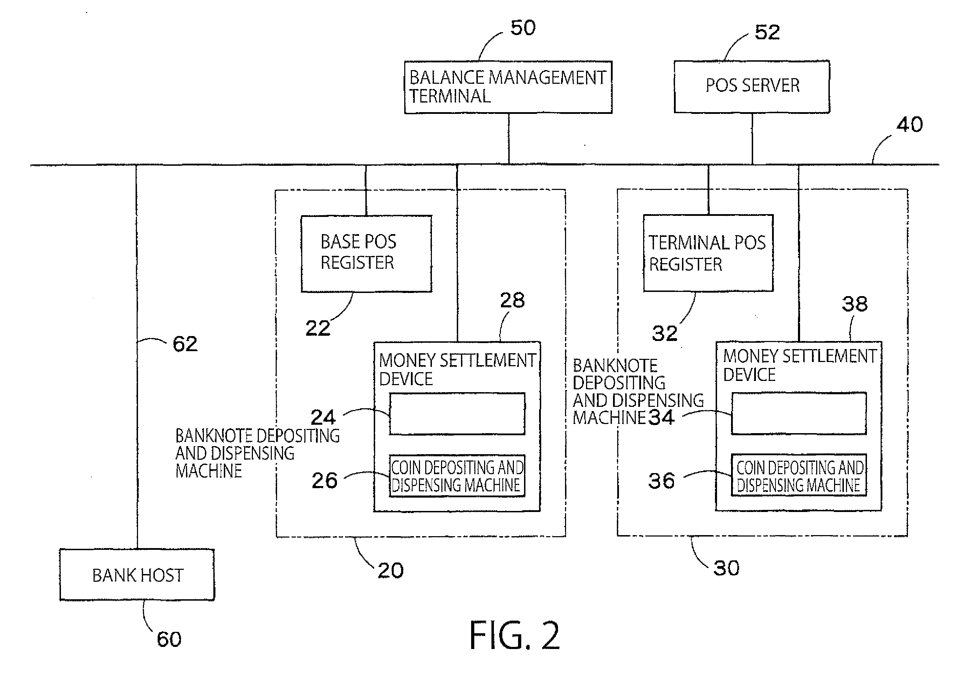

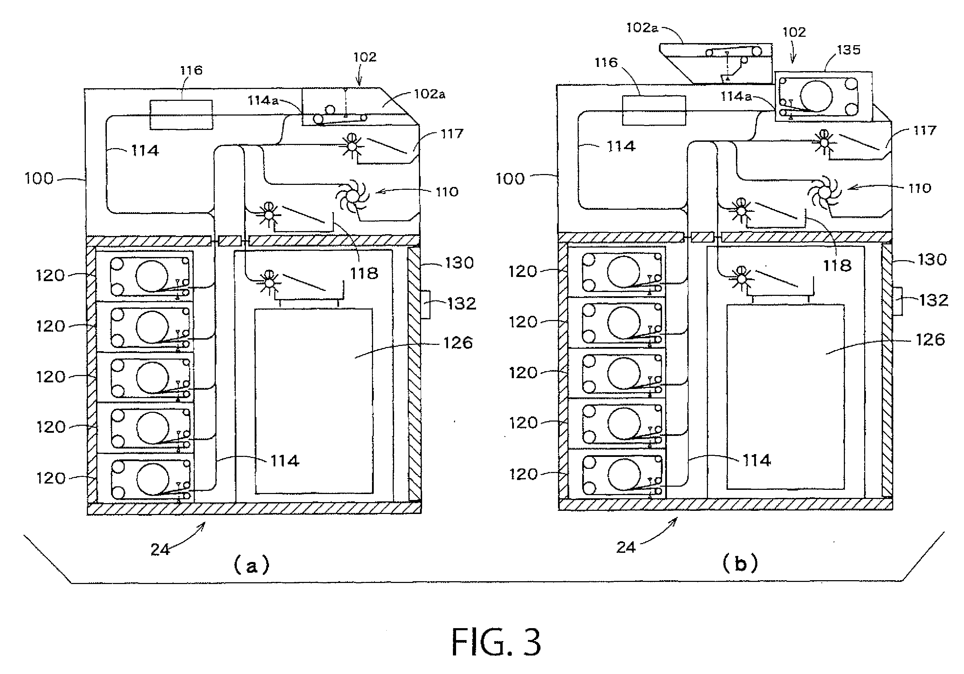

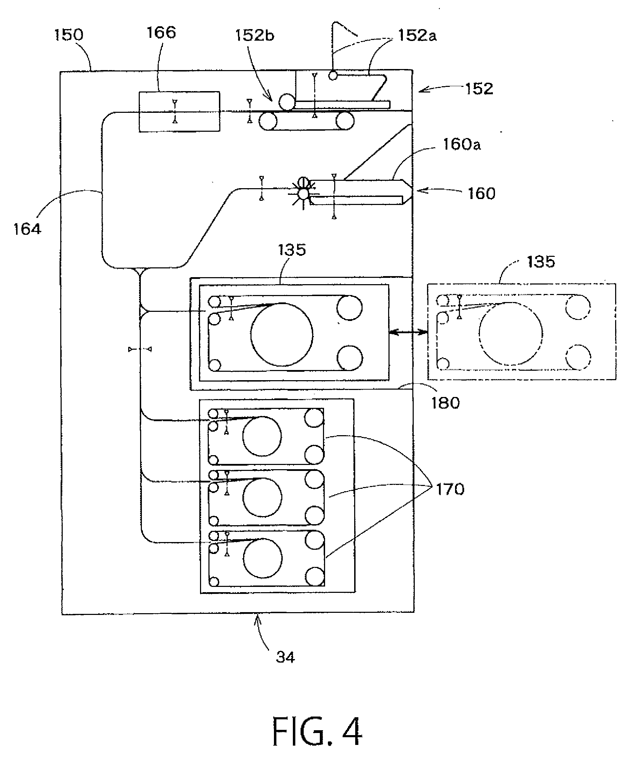

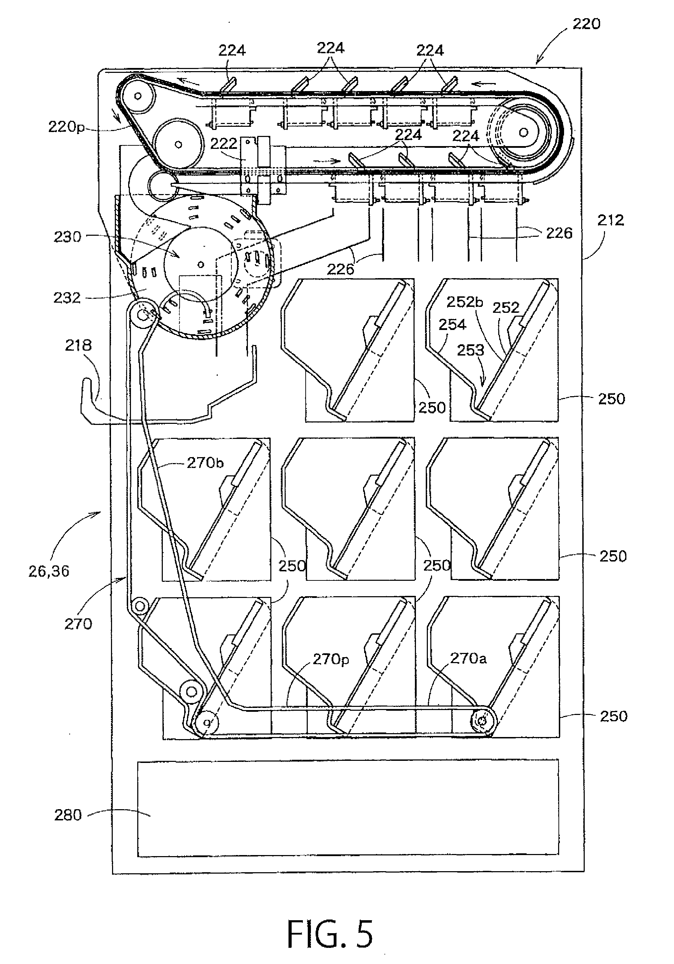

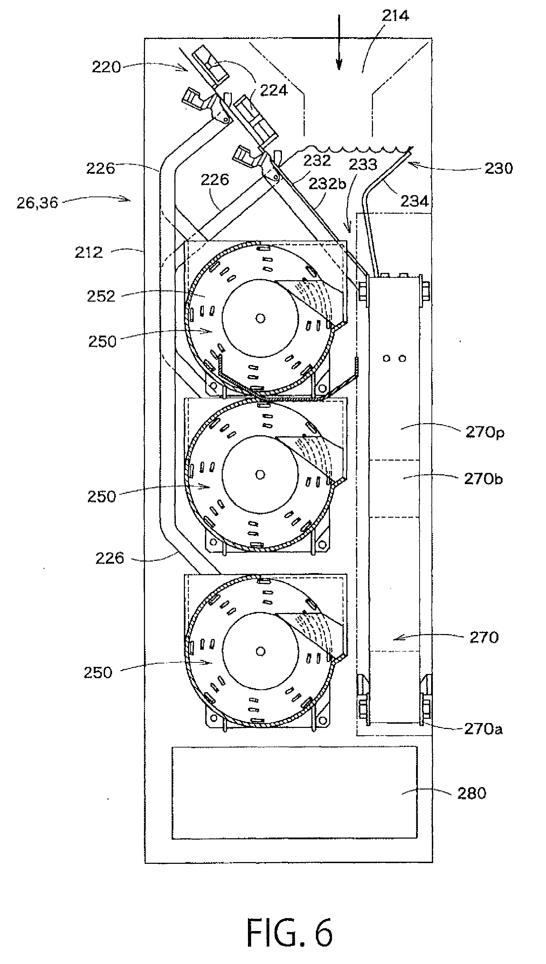

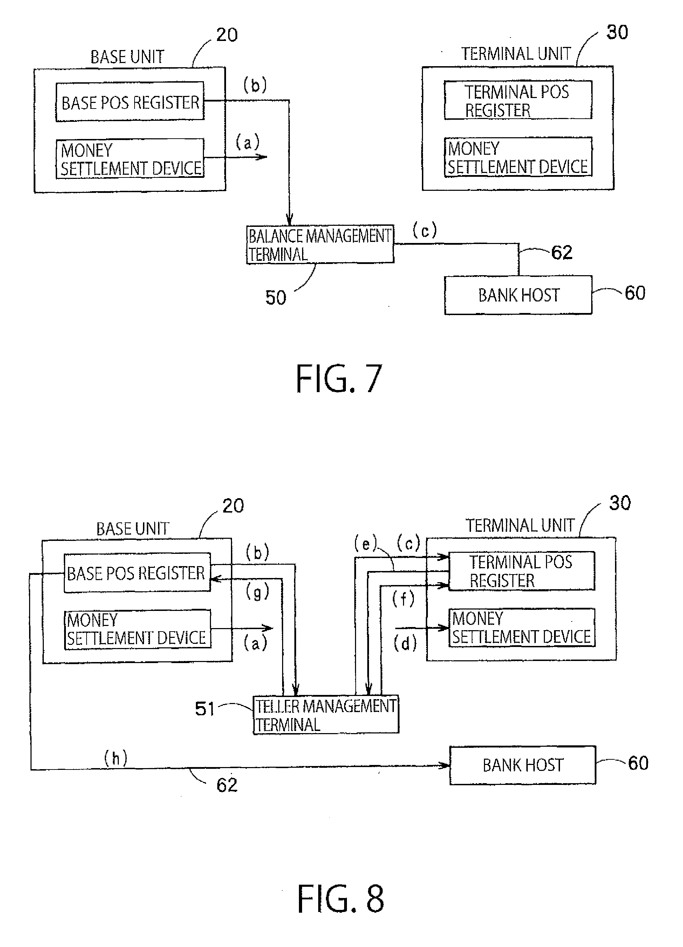

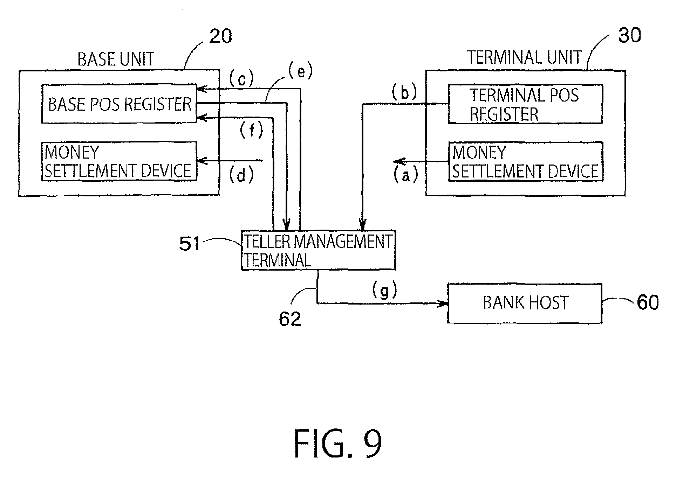

Hereinafter, embodiments of the present invention will be described with reference to the drawings. Figs. 1 to 9 are diagrams illustrating a register system according to the register system. Among the diagrams, Fig. 1 is a top view illustrating an outline of a configuration of a register system according to the present embodiment, and Fig. 2 is a schematic functional block diagram of the register system illustrated in Fig. 1, and the like. Further, Figs. 3(a) and 3(b), and Fig. 4 are side views illustrating internal configurations of banknote depositing and dispensing machines in a base unit and in a terminal unit, respectively. Further, Figs. 5 and 6 are a side view and a front view illustrating an internal configuration of a coin depositing and dispensing machine. Further, Fig. 7 is a diagram for describing an operation in which ATM dispensing is performed from the banknote depositing and dispensing machine of the base unit, and Fig. 8 is a diagram for describing an operation of replenishing process of replenishing banknotes stored in the banknote depositing and dispensing machine of the base unit to the banknote depositing and dispensing machine of the terminal unit as reserved supply of money. Further, Fig. 9 is a diagram for describing an operation of collecting process of collecting banknotes stored in the banknote depositing and dispensing machine of the terminal unit, and storing the banknotes in the banknote depositing and dispensing machine of the base unit.

A register system 10 according to the present embodiment is installed in a settlement place where a cashier (clerk) and a customer exchange banknotes and coins, in a store of retail business such as a department store, a supermarket or a convenience store. To be specific, in the register system 10 according to the present embodiment, when the customer performs payment of products, the customer hands over the products to the cashier, the cashier scans the products by a scanner and confirms a total amount of the products, and then, the customer gives the cashier banknotes or coins and receives change that is an amount of difference between an amount of money paid by the customer and the total amount of the products.

In the register system 10 as illustrated in Fig. 1, a counter 11 extending in a linear manner is provided, and three register units are provided on the counter 11. Here, the three register units are configured from one base unit (master unit) 20 and two terminal units (slave units) 30. In the example illustrated in Fig. 1, the base unit 20 is installed between the two terminal units 30. As illustrated in Figs. 1 and 2, the base unit 20 is configured from a base POS register 22, a banknote depositing and dispensing machine 24, and a coin depositing and dispensing machine 26. Each terminal unit 30 is configured from a terminal POS register 32, a banknote depositing and dispensing machine 34, and a coin depositing and dispensing machine 36. In the present embodiment, as illustrated in Fig. 2, a money settlement device 28 is configured from the banknote depositing and dispensing machine 24 and the coin depositing and dispensing machine 26 in the base unit 20. Further, a money settlement device 38 is configured from the banknote depositing and dispensing machine 34 and the coin depositing and dispensing machine 36 in the terminal unit 30.

In the register system 10 as illustrated in Fig. 1, the coin depositing and dispensing machine 26 of the base unit 20 and the coin depositing and dispensing machine 36 of each terminal unit 30 face a left side of the counter 11 in Fig. 1, that is, face a side of customers. Meanwhile, the banknote depositing and dispensing machine 24 of the base unit 20 and the banknote depositing and dispensing machine 34 of each terminal unit 30 face a right side of the counter 11 in Fig. 1, that is, face a side of cashiers. Further, scanners (not illustrated) are respectively provided in the vicinities of the base POS register 22 and the terminal POS registers 32 on the counter 11. These scanners are respectively communicably connected to the corresponding base POS register 22 and terminal POS registers 32. Product information scanned by the scanners is sent to the corresponding base POS register 22 and terminal POS registers 32.

In the register system 10 as illustrated in Fig. 1, the register units (the base unit 20 and the terminal units 30) are a semi-self system. That is, after the cashier scans the products by the scanner, the customer deposits coins in the coin depositing and dispensing machine 26 of the base unit 20 or the coin depositing and dispensing machine 36 of each terminal unit 30 by him/herself, and takes out coins dispensed from the coin depositing and dispensing machine 26 or 36 as change by him/herself. Meanwhile, the base POS register 22, the scanner, and the banknote depositing and dispensing machine 24 in the base unit 20, and the terminal POS register 32, the scanner, and the banknote depositing and dispensing machine 34 in the terminal unit 30 are operated by the cashier.

Fig. 2 is a schematic functional block diagram of the register system 10 illustrated in Fig. 1. As illustrated in Fig. 2, a balance management terminal 50 is provided in the register system 10, and the base POS register 22 and the money settlement device 28 in the base unit 20 are communicably connected with the balance management terminal 50 through a LAN 40. Further, the terminal POS register 32 and the money settlement device 38 in the terminal unit 30 are communicably connected with the balance management terminal 50 through the LAN 40. The balance management terminal 50 manages the balance of the money settlement device 28 of the base unit 20 and the balance of the money settlement device 38 of the terminal unit 30. Further, a POS server 52 is provided in the register system 10, and the POS server 52 is communicably connected with the balance management terminal 50, the base POS register 22 and the money settlement device 28 in the base unit 20, and the terminal POS register 32 and the money settlement device 38 in the terminal unit 30 through the LAN 40.

Further, as illustrated in Fig. 2, a bank host 60 is connected to the LAN 40 of the register system 10 through an ATM network 62 of a bank. This enables the bank host 60 and the balance management terminal 50 to perform transmission/reception of signals through the ATM network 62 of a bank and the LAN 40. At this time, the base unit 20 is communicably connected to the ATM network 62 of a bank.

Next, a configuration of the banknote depositing and dispensing machine 24 of the base unit 20 will be described with reference to Figs. 3(a) and 3(b). Figs. 3(a) and 3(b) are configuration diagrams illustrating internal configurations of the banknote depositing and dispensing machine 24 of the base unit 20. In more detail, Fig. 3(a) is a diagram illustrating a state of when a banknote reception unit 102a is mounted to a deposit unit 102, and Fig. 3(b) is a diagram illustrating a state of when a cash transport cassette 135 is mounted to the deposit unit 102.

As illustrated in Fig. 3(a), the deposit unit 102 and a dispensing unit 110 are provided in a front surface of a housing 100 of the banknote depositing and dispensing machine 24 (a side surface of a right side in Fig. 3(a)). The banknote reception unit 102a is mounted to the deposit unit 102 in a freely detachable manner. Here, when mounted to the deposit unit 102, the banknote reception unit 102a receives banknotes from an outside of the banknote depositing and dispensing machine 24 and sends out the banknotes into the housing 100 one by one. Such a banknote reception unit 102a is used when the cashier directly deposits the banknotes in the banknote depositing and dispensing machine 24. Note that, as illustrated in Fig. 3(b), the cash transport cassette 135 is mounted to the deposit unit 102 in place of the banknote reception unit 102a. When the cash transport cassette 135 is mounted to the deposit unit 102, the banknotes in the cash transport cassette 135 are fed into the housing 100 one by one by a feeding mechanism provided inside the cash transport cassette 135. The cash transport cassette 135 is used when the banknotes are conveyed between the banknote depositing and dispensing machine 24 of the base unit 20 and the banknote depositing and dispensing machine 34 of the terminal unit 30. Further, when the cash transport cassette 135 is taken out of the banknote depositing and dispensing machine 24 of the base unit 20 or the banknote depositing and dispensing machine 34 of the terminal unit 30, the banknotes stored in the cash transport cassette 135 cannot be taken out of the cash transport cassette 135 to an outside.

As illustrated in Figs. 3(a) and 3(b), a transport unit 114 that conveys the banknotes one by one are provided in the housing 100 of the banknote depositing and dispensing machine 24, and the deposit unit 102 is provided in an end portion 114a of the transport unit 114. When the banknote reception unit 102a or the cash transport cassette 135 is mounted to the deposit unit 102, the banknotes fed from the banknote reception unit 102a or the cash transport cassette 135 are conveyed by the transport unit 114 through the end portion 114a of the transport unit 114.

As illustrated in Figs. 3(a) and 3(b), an recognition unit 116 is provided in the transport unit 114, and a denomination, soundness, genuineness, and the like of the banknotes conveyed by the transport unit 114 are identified by the recognition unit 116.

Further, a safe 130 is installed in a lower portion of the housing 100 of the banknote depositing and dispensing machine 24, and a plurality of (to be specific, for example, five) storing and feeding units 120 is provided inside the safe 130. The storing and feeding units 120 are connected to the transport unit 114, and the banknotes are sent from the transport unit 114 to the storing and feeding unit 120 by denomination and are stored in the storing and feeding units 120. Further, the banknotes stored in the storing and feeding units 120 can be fed to the transport unit 114 one by one. The storing and feeding unit 120 may be a tape-reel type of storing and feeding unit that winds a pair of tapes together with the banknotes in a state in which the pair of tapes sandwich the banknotes one at a time, as illustrated in Figs. 3(a) and 3(b), or may be a stacker type of storing and feeding unit (not illustrated) that stacks and stores the banknotes.

Further, a collection cassette 126 is provided in the safe 130, and the transport unit 114 is connected with the collection cassette 126. When the banknotes are sent from the transport unit 114 to the collection cassette 126, the banknotes are accumulated inside the collection cassette 126.

As illustrated in Figs. 3(a) and 3(b), a dial lock 132 is provided to the safe 130, and only a person having specific authority such as a specific collecting bank person can operate the dial lock 132 and open the safe 130. When the safe 130 is opened, the banknotes in the collection cassette 126 are collected together with the collection cassette 126 by the person having specific authority.

As described above, in the present embodiment, the storing and feeding units 120 of the banknote depositing and dispensing machine 24 are arranged in the safe 130 that can be accessed by the person having specific authority such as the specific collecting person of a bank. The banknotes stored in the storing and feeding units 120 of the banknote depositing and dispensing machine 24 are under management authority of a bank. In this way, the banknote depositing and dispensing machine 24 of the base unit 20 also functions as an ATM machine of a bank.

Further, as illustrated in Figs. 3(a) and 3(b), an external reject unit 117 and an internal reject unit 118 are provided in the banknote depositing and dispensing machine 24. Here, a banknote identified that is not a normal banknote by the recognition unit 116, among the banknotes taken into the housing 100 by the deposit unit 102, is sent from the transport unit 114 to the external reject unit 117 as rejected banknote, and the rejected banknotes are ejected by the external reject unit 117 to an outside of the banknote depositing and dispensing machine 24. Meanwhile, the rejected banknote that cannot be ejected to an outside of the banknote depositing and dispensing machine 24 is sent from the transport unit 114 to the internal reject unit 118, and the rejected banknotes are stored in the internal reject unit 118. An operator having no authority such as a cashier cannot take out the banknote in the internal reject unit 118.

Next, a configuration of the banknote depositing and dispensing machine 34 of the terminal unit 30 will be described with reference to Fig. 4. Fig. 4 is a configuration diagram illustrating an internal configuration of the banknote depositing and dispensing machine 34 of the terminal unit 30.

As illustrated in Fig. 4, a deposit unit 152 and a dispensing unit 160 are provided on a front surface (side surface of a right side in Fig. 4) of a housing 150 of the banknote depositing and dispensing machine 34 of the terminal unit 30. A deposit unit cover 152a and a banknote feeding mechanism 152b are provided in the deposit unit 152, and when the cashier directly deposits the banknotes in the banknote depositing and dispensing machine 34, the cashier sets the banknotes in the deposit unit 152 in a stacked state, and presses the banknotes set in the deposit unit 152 by the deposit unit cover 152a from above, and then the banknotes are fed by the banknote feeding mechanism 152b into the housing 150 one by one. A transport unit 164 is provided in the housing 150 of the banknote depositing and dispensing machine 34, and the transport unit 164 conveys the banknotes fed into the housing 150 by the banknote feeding mechanism 152b one by one. An recognition unit 166 is provided in the transport unit 164, and denomination, soundness, genuineness, and the like of the banknotes fed by the banknote feeding mechanism 152b into the housing 150 are identified by the recognition unit 166.

Further, a plurality of storing and feeding units 170 is provided in the housing 150, and the storing and feeding units 170 are connected to the transport unit 164. The storing and feeding units 170 store the banknotes by denomination. To be specific, the banknotes fed by the banknote feeding mechanism 152b into the housing 150 are sent by the transport unit 164 to the storing and feeding unit 170 by denomination based on an recognition result by the recognition unit 166. Further, each storing and feeding unit 170 can feed the banknotes stored in the storing and feeding unit 170 to the transport unit 164 one by one. The storing and feeding unit 170 may be a tape-reel type storing and feeding unit that winds a pair of tapes together with the banknotes in a state in which the pair of tapes sandwich the banknotes one at a time, as illustrated in Fig. 4, or may be a stacker type storing and feeding unit (not illustrated) that stacks and stores the banknotes.

Note that, in the present embodiment, the banknote depositing and dispensing machine 24 of the base unit 20 can store a larger number of banknotes than the banknote depositing and dispensing machine 34 of the terminal unit 30. To be specific, a stored amount of banknotes of the storing and feeding unit 120 of the banknote depositing and dispensing machine 24 of the base unit 20 and a stored amount of banknotes of the storing and feeding unit 170 of the banknote depositing and dispensing machine 34 of the terminal unit 30 are approximately the same. However, while five storing and feeding units 120 are provided in the banknote depositing and dispensing machine 24 of the base unit 20, only three storing and feeding units 170 are provided in the banknote depositing and dispensing machine 34 of the terminal unit 30. Therefore, the stored amount of banknotes of the banknote depositing and dispensing machine 24 of the base unit 20 as a whole is larger than that of the banknote depositing and dispensing machine 34 of the terminal unit 30 as a whole.

Further, as illustrated in Fig. 4, a cassette mount unit 180 to which the cash transport cassette 135 is mounted in a freely detachable manner is provided in the housing 150. The cassette mount unit 180 is connected to the transport unit 164, and when the cash transport cassette 135 is mounted to the cassette mount unit 180, the banknote can be sent from the transport unit 164 to the cash transport cassette 135, and the banknote stored in the cash transport cassette 135 can be fed to the transport unit 164.

Further, a dispensing unit shutter 160a is provided in the dispensing unit 160. After the banknotes are sent to the dispensing unit 160, the cashier can take out the banknotes accumulated in the dispensing unit 160 by opening the dispensing unit shutter 160a.

Next, details of configurations of the coin depositing and dispensing machine 26 of the base unit 20 and the coin depositing and dispensing machine 36 of the terminal unit 30 will be described with reference to Figs. 5 and 6. In the present embodiment, the coin depositing and dispensing machine 26 of the base unit 20 and the coin depositing and dispensing machine 36 of the terminal unit 30 have approximately the same configuration.

Fig. 5 is a side view illustrating an internal configuration of the coin depositing and dispensing machines 26 and 36, and Fig. 6 is a front view of the coin depositing and dispensing machines 26 and 36 illustrated in Fig. 5.

As illustrated in Figs. 5 and 6, the coin depositing and dispensing machines 26 and 36 include a housing 212 having an approximately rectangular parallelepiped shape, a coin reception port 214 (see Fig. 6) that receives coins from an outside of the housing 212, and a reserving feeding mechanism 230 that pools the coins received through the coin reception port 214 and sends out the coins one by one. The reserving feeding mechanism 230 includes a rotating disk 232 inclined at a predetermined angle with respect to the vertical direction and rotated in an inclined attitude, and a cover member 234 that forms a coin reserving space 233 between the cover member 234 and a surface 232b of the rotating disk 232.

Further, a deposit transport unit 220 that conveys the coins fed from the reserving feeding mechanism 230 one by one is provided in the housing 212, and an recognition unit 222 that identifies the coin conveyed by the deposit transport unit 220 is provided in the deposit transport unit 220. An endless belt 220p is provided in the deposit transport unit 220. The endless belt 220p is stretched over a plurality of pulleys, and the endless belt 220p is circularly moved by a motor attached to one pulley in a counter clockwise direction in Fig. 5. Further, a plurality of protrusion members (not illustrated) is provided on the endless belt 220p at even intervals, and one coin is hooked by one protrusion member, so that the coins are conveyed on a transport surface one by one.

Further, a plurality of (to be specific, eight) storing and feeding mechanisms 250 is provided below the deposit transport unit 220 in the housing 212. The coin is sent from the deposit transport unit 220 through a chute 226 by a sorting unit 224 provided in the deposit transport unit 220 based on an recognition result of the coin by the recognition unit 222, and is stored in the storing and feeding mechanisms 250. Further, each storing and feeding mechanism 250 sends out the coins stored in the storing and feeding mechanism 250 one by one. To be specific, each storing and feeding mechanism 250 includes a rotating disk 252 inclined at a predetermined angle with respect to the vertical direction and rotated in an inclined attitude, and a cover member 254 that forms a coin storing unit space 253 that store the coins between the cover member 254 and a surface 252b of the rotating disk 252.

Further, a coin ejection port 218 that ejects the coins outside the housing 212 is provided in the coin depositing and dispensing machines 26 and 36, and a dispensing transport unit 270 that conveys the coins fed from the storing and feeding mechanisms 250 to the coin ejection port 218 is provided inside the housing 212. A first dispensing transporting portion 270a provided below the storing and feeding mechanisms 250 and extending in an approximately horizontal direction, and a second dispensing transporting portion 270b that conveys the coins sent from the first dispensing transporting portion 270a to the coin ejection port 218 are provided in the dispensing transport unit 270. Further, the dispensing transport unit 270 is configured from an endless belt 270p stretched over a plurality of pulleys. The endless belt 270p is circularly moved by a motor attached to one pulley in both a clockwise and a counter-clockwise directions in Fig. 5. Further, a plurality of protrusion members (not illustrated) is provided on the endless belt 270p at even intervals, and one or more coins are hooked by one protrusion member, so that the coins are conveyed by the endless belt 270p one or more at a time.

Further, a collection box 280 is provided below the dispensing transport unit 270 in the housing 212. The collection box 280 is provided in the housing 212 in a freely detachable manner. Further, the coins for collection are sent from the first dispensing transporting portion 270a in the dispensing transport unit 270 to the collection box 280. After the coins are stored in the collection box 280, the collection box 280 is taken out of the housing 212, so that the coins can be collected together with the collection box 280.

Next, an operation in the register system 10 made of such configurations will be described below. When settlement process is performed by the register system 10 of the present embodiment, first, a customer hands over products to be settled to the cashier in the base unit 20 or in the terminal unit 30, and the cashier scans the products by the scanner (not illustrated). Product information scanned by the scanner is sent to the base POS register 22 or the terminal POS register 32, and a total amount of the products is displayed on a display screen (not illustrated) of the base POS register 22 or the terminal POS register 32. Following that, the customer directly deposits the coins in the coin depositing and dispensing machine 26 or 36, and hands over the banknotes to the cashier. The cashier deposits the banknotes handed over from the customer in the banknote depositing and dispensing machine 24 or 34.

Following that, the base POS register 22 or the terminal POS register 32 calculates an amount of change based on a total deposit amount of the coins and the banknotes in the coin depositing and dispensing machine 26 or 36 and in the banknote depositing and dispensing machine 24 or 34. Then, coins and banknotes are dispensed from the coin depositing and dispensing machine 26 or 36 and the banknote depositing and dispensing machine 24 or 34 as change. The coins dispensed from the coin depositing and dispensing machine 26 or 36 are taken out by the customer him/herself, and the banknotes dispensed from the banknote depositing and dispensing machine 24 or 34 are taken out by the cashier, and the cashier hands over the banknotes to the customer. As described above, a series of operations of the settlement process performed between the customer and the cashier is completed.

In the register system 10 of the present embodiment, the settlement process is mainly performed in the base unit 20 during the off-season period. Since the banknote depositing and dispensing machine 24 of the base unit 20 functions as an ATM of a bank, the banknotes deposited in the banknote depositing and dispensing machine 24 can be an ATM deposit, and thus, the banknotes received from the customer can be safely managed. Meanwhile, during the on-season period, the settlement process is performed in both the base unit 20 and the terminal unit 30. In this case, when the business hour of the store ends and closing process is performed, collecting process of collecting the banknotes stored in the banknote depositing and dispensing machine 34 of the terminal unit 30 and storing the banknotes in the banknote depositing and dispensing machine 24 of the base unit 20 is performed. In this way, the banknotes stored in the banknote depositing and dispensing machine 34 of the terminal unit 30 are also an ATM deposit in the banknote depositing and dispensing machine 24 of the base unit 20. Note that details of an operation of such collecting process will be described below.

Further, in the present embodiment, as described above, the banknote depositing and dispensing machine 24 of the base unit 20 also functions as an ATM machine of a bank. Such an operation in which an ATM dispensing is performed from the banknote depositing and dispensing machine 24 of the base unit 20 will be described with reference to Fig. 7.

In normal settlement, when information of a card number of the customer and the like and information related to an amount to be dispensed are input to the base POS register 22 of the base unit 20, the banknotes stored in the storing and feeding units 120 of the banknote depositing and dispensing machine 24 of the base unit 20 are dispensed from the banknote depositing and dispensing machine 24 (see the reference sign (a) of Fig. 7). At this time, information related to the banknotes dispensed from the banknote depositing and dispensing machine 24 (hereinafter, referred to ATM dispensing information. To be specific, information of the number of dispensed banknotes by denomination, the total amount, and the like are the ATM dispensing information) is sent from the base POS register 22 to the balance management terminal 50 (see the reference sign (b) of Fig. 7). The ATM dispensing information is transmitted from the balance management terminal 50 to the ATM network 62 of a bank, and finally, the ATM dispensing information is transmitted from the ATM network 62 of a bank to the bank host 60 (see the reference sign (c) of Fig. 7). In this way, when the banknotes are dispensed from the banknote depositing and dispensing machine 24 of the base unit 20, the ATM dispensing information is transmitted from the base POS register 22 of the base unit 20 to the ATM network 62 of a bank through the balance management terminal 50. Note that, in the embodiment illustrated in Fig. 7, the ATM dispensing information is transmitted from the base POS register 22 of the base unit 20 to the ATM network 62 of a bank through the balance management terminal 50. As another embodiment, the ATM dispensing information may be directly transmitted from the base POS register 22 of the base unit 20 to the ATM network 62 of a bank (without through the balance management terminal 50).

Further, in the present embodiment, the base unit 20 performs, with respect to the terminal unit 30, the replenishing process of replenishing the banknotes stored in the banknote depositing and dispensing machine 24 of the base unit 20 to the banknote depositing and dispensing machine 34 of the terminal unit 30, and the collecting process of collecting the banknotes stored in the banknote depositing and dispensing machine 34 of the terminal unit 30 and storing the banknotes in the banknote depositing and dispensing machine 24 of the base unit 20. The replenishing process and the collecting process are performed by a teller management terminal 51 as illustrated in Figs. 8 and 9. The teller management terminal 51 may be provided in the balance management terminal 50, or may be provided in the base POS register 22 of the base unit 20.

An operation of the replenishing process of replenishing the banknotes stored in the banknote depositing and dispensing machine 24 of the base unit 20 to the banknote depositing and dispensing machine 34 of the terminal unit 30 will be described with reference to Fig. 8.

In performing the replenishing process, first, the banknotes stored in the storing and feeding units 120 of the banknote depositing and dispensing machine 24 of the base unit 20 are dispensed from the banknote depositing and dispensing machine 24 (see the reference sign (a) of Fig. 8).

To be specific, the banknotes are fed from the storing and feeding units 120 of the banknote depositing and dispensing machine 24 to the transport unit 114, and the fed banknotes are conveyed by the transport unit 114 to the dispensing unit 110, so that the cashier can take out the accumulated banknotes to the dispensing unit 110. Note that, as another dispensing method, after the cash transport cassette 135 is mounted to the deposit unit 102, the banknotes are fed from the storing and feeding units 120 of the banknote depositing and dispensing machine 24 to the transport unit 114, and the fed banknotes may be conveyed by the transport unit 114 to the cash transport cassette 135. In this case, after the banknotes as the reserved supply of money are stored in the cash transport cassette 135, the cashier conveys the banknotes together with the cash transport cassette 135 from the base unit 20 to the terminal unit 30.

Further, when the banknotes are dispensed from the banknote depositing and dispensing machine 24 of the base unit 20, information related to the banknotes dispensed from the banknote depositing and dispensing machine 24 (hereinafter, referred to as dispensing information. To be specific, information of the number of dispensed banknotes by denomination, the total amount, and the like are the dispensing information) is transmitted from the base POS register 22 to the teller management terminal 51 (see the reference sign (b) of Fig. 8). When having received the dispensing information from the base POS register 22, the teller management terminal 51 transmits a deposit wait instruction to the terminal POS register 32 of the terminal unit 30 (see the reference sign (c) of Fig. 8). This enables the banknote depositing and dispensing machine 34 of the terminal unit 30 to be switched from a normal settlement mode to a deposit wait mode. In the deposit wait mode, another process cannot be performed in the banknote depositing and dispensing machine 34 of the terminal unit 30 until the banknotes dispensed from the banknote depositing and dispensing machine 24 of the base unit 20 as the reserved supply of money is deposited in the banknote depositing and dispensing machine 34 of the terminal unit 30.

Following that, the cashier deposits the banknotes in the banknote depositing and dispensing machine 34 of the terminal unit 30 (see the reference sign (d) of Fig. 8). To be specific, when the banknotes are taken out of the dispensing unit 110 of the banknote depositing and dispensing machine 24 of the base unit 20, and the banknotes are conveyed from the base unit 20 to the terminal unit 30 by the cashier, the cashier sets the banknotes in the deposit unit 152 in the banknote depositing and dispensing machine 34 of the terminal unit 30 in a stacked state. Then, the banknotes set in the deposit unit 152 are fed by the banknotes feeding mechanism 152b into the housing 150 one by one, identified by the recognition unit 166, and then stored in the storing and feeding unit 170 by denomination. Meanwhile, when the cashier conveys the banknotes together with the cash transport cassette 135 from the base unit 20 to the terminal unit 30, the cashier mounts the cash transport cassette 135 to the cassette mount unit 180 in the banknote depositing and dispensing machine 34 of the terminal unit 30. When the cash transport cassette 135 is mounted to the cassette mount unit 180, the banknotes stored in the cash transport cassette 135 is fed to the transport unit 164, and stored in the storing and feeding units 170 by denomination.

When the banknotes are deposited in the banknote depositing and dispensing machine 34 of the terminal unit 30, the terminal POS register 32 of the terminal unit 30 transmits information related to the banknotes deposited in the banknote depositing and dispensing machine 34 (hereinafter, referred to as deposit information. To be specific, information of the number of deposited banknotes by denomination, the total amount, and the like, or a deposit status is the deposit information) to the teller management terminal 51 (see the reference sign (e) of Fig. 8)). Here, as the deposit status, when the total amount of the banknotes dispensed from the banknote depositing and dispensing machine 24 of the base unit 20 and the total amount of the banknotes deposited in the banknote depositing and dispensing machine 34 of the terminal unit 30 are equal, the status becomes "deposit completed". When the total amount of the banknotes deposited in the banknote depositing and dispensing machine 34 of the terminal unit 30 is short to the total amount of the banknotes dispensed from the banknote depositing and dispensing machine 24 of the base unit 20, or when a deposit operation to the banknote depositing and dispensing machine 34 of the terminal unit 30 is not started within a predetermined time, the status becomes "deposit not completed".

When having received the deposit information from the terminal POS register 32 of the terminal unit 30, the teller management terminal 51 transmits a deposit wait cancel instruction to the terminal POS register 32 of the terminal unit 30

(see the reference sign (f) of Fig. 8). This enables the banknote depositing and dispensing machine 34 of the terminal unit 30 to be switched from the deposit wait mode to the normal settlement mode. Further, the teller management terminal 51 transmits an ATM dispensing confirmation instruction to the base POS register 22 of the base unit 20 (see the reference sign (g) of Fig. 8). Here, the ATM dispensing confirmation instruction is an instruction to confirm a dispensing operation of the banknotes from the banknote depositing and dispensing machine 24 of the base unit 20 is ATM dispensing from the banknote depositing and dispensing machine 24 that functions as an ATM. When having received the ATM dispensing confirmation instruction from the teller management terminal 51, the base POS register 22 of the base unit 20 transmits ATM dispensing information (to be specific, information of the number of dispensed banknotes by denomination, the total amount, and the like) to the ATM network 62 of bank, and finally, the ATM dispensing information is transmitted from the ATM network 62 to the bank host 60 (see the reference sign (h) of Fig. 8). In this way, when the replenishing process of replenishing the banknotes stored in the banknote depositing and dispensing machine 24 of the base unit 20 to the banknote depositing and dispensing machine 34 of the terminal unit 30 is performed, the ATM dispensing information is transmitted from the base POS register 22 of the base unit 20 to the ATM network 62 of a bank. Note that, in the embodiment illustrated in Fig. 8, the ATM dispensing information is directly transmitted from the base POS register 22 of the base unit 20 to the ATM network 62 of a bank. However, as another embodiment, the ATM dispensing information may be sent from the teller management terminal 51 to the ATM network 62 of a bank.

Next, an operation of the collecting process of collecting the banknotes stored in the banknote depositing and dispensing machine 34 of the terminal unit 30, and storing the banknotes in the banknote depositing and dispensing machine 24 of the base unit 20 will be described with reference to Fig. 9. As described above, the banknote depositing and dispensing machine 24 of the base unit 20 also functions as an ATM machine, and performs an operation of such collecting process, so that the banknotes stored in the banknote depositing and dispensing machine 34 of the terminal unit 30 is deposited in an account of the bank, and thus the banknotes can be safely managed.

In performing the collecting process, first, the banknotes stored in the storing and feeding units 170 of the banknote depositing and dispensing machine 34 of the terminal unit 30 is dispensed from the banknote depositing and dispensing machine 34 (see the reference sign (a) of Fig. 9).

To be specific, the banknotes are fed from the storing and feeding units 170 of the banknote depositing and dispensing machine 34 to the transport unit 164, and the fed banknotes are conveyed by the transport unit 164 to the dispensing unit 160, so that the cashier can manually take out the banknotes accumulated in the dispensing unit 160. Note that, as another dispensing method, after the cash transport cassette 135 is mounted to the cassette mount unit 180, the banknotes are fed from the storing and feeding units 170 of the banknote depositing and dispensing machine 34 to the transport unit 164, and the fed banknotes may be conveyed by the transport unit 164 to the cash transport cassette 135. In this case, after the banknotes to be collected are stored in the cash transport cassette 135, the cashier conveys the banknotes together with the cash transport cassette 135 from the terminal unit 30 to the base unit 20.

Further, when the banknotes are collected from the banknote depositing and dispensing machine 34 of the terminal unit 30, information related to the banknotes collected form the banknote depositing and dispensing machine 34 (hereinafter, may be referred to as collection information. To be specific, information of the number of collected banknotes by denomination, the total amount, and the like is the collection information) is transmitted from the terminal POS register 32 to the teller management terminal 51 (see the reference sign (b) of Fig. 9). When having received the dispensing information from the terminal POS register 32, the teller management terminal 51 transmits a deposit wait instruction to the base POS register 22 of the base unit 20 (see the reference sign (c) of Fig. 9). This enables the banknote depositing and dispensing machine 24 of the base unit 20 to be switched from the normal settlement mode to the deposit wait mode. In the deposit wait mode, another process cannot be performed in the banknote depositing and dispensing machine 24 of the base unit 20 until the banknotes collected from the banknote depositing and dispensing machine 34 of the terminal unit 30 is deposited in the banknote depositing and dispensing machine 24 of the base unit 20.

Following that, the cashier deposits the banknotes in the banknote depositing and dispensing machine 24 of the base unit 20 (see the reference sing (d) of Fig. 9). To be specific, when the banknotes are taken out of the dispensing unit 160 of the banknote depositing and dispensing machine 34 of the terminal unit 30, and the banknotes are conveyed by the cashier from the terminal unit 30 to the base unit 20, the cashier mounts the banknotes reception unit 102a to the deposit unit 102 of the banknote depositing and dispensing machine 24 of the base unit 20 (see Fig. 4(a)), and sets the banknotes conveyed from the terminal unit 30 to the base unit 20 in the banknote reception unit 102a. The banknotes set in the banknote reception unit 102a is fed into the housing 100 one by one, identified by the recognition unit 116, and then stored in the storing and feeding units 120 by denomination. Meanwhile when the cashier conveys the banknotes together with the cash transport cassette 135 from the terminal unit 30 to the base unit 20, the cashier mounts the cash transport cassette 135 to the deposit unit 102 in the banknote depositing and dispensing machine 24 of the base unit 20 (see Fig. 4(b)). When the cash transport cassette 135 is mounted to the deposit unit 102, the banknotes stored in the cash transport cassette 135 is fed to the transport unit 114, identified by the recognition unit 116, and then stored in the storing and feeding units 120 by denomination.

When the banknotes are deposited in the banknote depositing and dispensing machine 24 of the base unit 20, the base POS register 22 of the base unit 20 transmits information related to the banknotes deposited in the banknote depositing and dispensing machine 24 (hereinafter, may be referred to as deposit information. To be specific, information of the number of deposited banknotes by denomination, the total amount, or a deposit status is the deposit information) to the teller management terminal 51 (see the reference sign (e) of Fig. 9). Here, as the deposit status, when the total amount of the banknotes collected from the banknote depositing and dispensing machine 34 of the terminal unit 30 and the total amount of the banknotes deposited in the banknote depositing and dispensing machine 24 of the base unit 20 are equal, the status becomes "deposit completed". When the total amount of the banknotes deposited in the banknote depositing and dispensing machine 24 of the base unit 20 is short to the total amount of the banknotes dispensed from the banknote depositing and dispensing machine 34 of the terminal unit 30, or when a deposit operation to the banknote depositing and dispensing machine 24 of the base unit 20 is not started within a predetermined time, the status becomes "deposit not completed".

When having received the deposit information from the base POS register 22 of the base unit 20, the teller management terminal 51 transmits a deposit wait cancel instruction to the base POS register 22 of the base unit 20 (see the reference sign (f) of Fig. 9). This enables the banknote depositing and dispensing machine 24 of the base unit 20 to be switched from the deposit wait mode to the normal settlement mode. Further, the teller management terminal 51 transmits ATM deposit information (to be specific, information of the number of banknotes deposited in the banknote depositing and dispensing machine 24, the total amount, and the like) to the ATM network 62 of a bank, and finally, the ATM deposit information is transmitted from the ATM network 62 of a bank to the bank host 60 (see the reference sign (g) of Fig. 9). In this way, when the collecting process of collecting the banknotes stored in the banknote depositing and dispensing machine 34 of the terminal unit 30, and storing the banknotes in the banknote depositing and dispensing machine 24 of the base unit 20 is performed, the ATM deposit information is transmitted from the base POS register 22 of the base unit 20 to the ATM network 62 through the teller management terminal 51. Note that, in the embodiment illustrated in Fig. 9, the ATM dispensing information is transmitted from the base POS register 22 of the base unit 20 to the ATM network 62 of a bank through the teller management terminal 51. However, as another embodiment, the ATM dispensing information may be directly sent from the base POS register 22 of the base unit 20 to the ATM network 62 of a bank (without through the teller management terminal 51).

Note that, although the replenishing process and the collecting process as illustrated in Figs. 8 and 9 are performed by the teller management terminal 51, performing of the process is not limited to the embodiment. Installation of the teller management terminal 51 is omitted, and the replenishing process and the collecting process of the banknotes as illustrated in Figs. 8 and 9 may be performed by the balance management terminal 50 instead. Alternatively, the replenishing process and the collecting process of the banknotes as illustrated in Figs. 8 and 9 may be performed by the base POS register 22 of the base unit 20. In these cases, the dispensing information (ATM dispensing information) of the banknotes dispensed from the banknote depositing and dispensing machine 24 of the base unit 20 and the deposit information (ATM dispensing information) of the banknotes deposited in the banknote depositing and dispensing machine 24 of the base unit 20 are transmitted from the base unit 20 to the ATM network 62 of a bank.

As described above, according to the register system 10 of the present embodiment, a plurality of register units includes the base unit 20 and the terminal unit 30, and the banknote depositing and dispensing machine 24 of the base unit 20 includes the storing and feeding units 120 arranged in the safe 130, an interior of which can be accessed only by a person having specific authority. In this way, the cost can be reduced, compared with a case in which the storing and feeding units 120 and 170 of all of the banknote depositing and dispensing machines 24 and 34 are arranged in the safe, by arranging only the storing and feeding units 120 of the banknote depositing and dispensing machine 24 of the base unit 20 in the safe 130 that can be accessed only by a person having specific authority. In addition, the banknotes received from the customer can be safely managed, by performing the settlement process mainly by the banknote depositing and dispensing machine 24 of the base unit 20 during the off-season period.

Further, as described above, the banknote depositing and dispensing machine 24 of the base unit 20 can store a larger amount of banknotes than the banknote depositing and dispensing machine 34 of the terminal unit 30. This enables the banknote depositing and dispensing machine 24 that functions as an ATM of a bank to store a large amount of banknotes, and thus the large number of banknotes can be safely managed.

Further, according to the register system 10 of the present embodiment, the base unit 20 can performs, with respect to the terminal unit 30, the replenishing process of replenishing the banknotes stored in the banknote depositing and dispensing machine 24 of the base unit 20 to the banknote depositing and dispensing machine 34 of the terminal unit 30, and the collecting process of collecting the banknotes stored in the banknote depositing and dispensing machine 34 of the terminal unit 30, and storing the banknotes in the banknote depositing and dispensing machine 24 of the base unit 20. As described above, the change replenishing work of change with respect to the banknote depositing and dispensing machines 34 of the terminal unit 30 before the start of business of a store, and the collecting work of the banknotes from the banknote depositing and dispensing machines 34 of the terminal unit 30 after the end of business of the store can be efficiently performed, by performing the replenishing process and the collecting process by the base unit 20 with respect to the terminal unit 30.

Further, in the register system 10 of the present embodiment, the balance management terminal 50 communicably connected with the base unit 20 and the terminal unit 30 is installed, and the balance management terminal 50 manages the balance of the money settlement device 28 of the base unit 20 and the balance of the money settlement device 38 of the terminal unit 30.

Further, in the register system 10 of the present embodiment, the base unit 20 is communicably connected to the ATM network 62 of a bank, and the base unit 20 is communicably connected to the bank host 60 through the ATM network 62 of a bank.

Further, in the register system 10 of the present embodiment, as illustrated in Fig. 7, when the banknotes are dispensed from the banknote depositing and dispensing machine 24 of the base unit 20, the dispensing information of the banknotes are transmitted from the base unit 20 to the ATM network 62 of a bank. Further, as illustrated in Fig. 8, when the replenishing process of replenishing the banknotes stored in the banknote depositing and dispensing machine 24 of the base unit 20 to the banknote depositing and dispensing machine 34 of the terminal unit 30 is performed, the dispensing information of the banknotes dispensed from the banknote depositing and dispensing machine 24 of the base unit 20 is transmitted from the base unit 20 to the ATM network 62 of a bank. Further, as illustrated in Fig. 9, when the collecting process of collecting the banknotes stored in the banknote depositing and dispensing machine 34 of the terminal unit 30, and storing the banknotes in the banknote depositing and dispensing machine 24 of the base unit 20 is performed, the deposit information of the banknotes deposited in the banknote depositing and dispensing machine 24 of the base unit 20 is transmitted from the base unit 20 to the ATM network 62 of a bank.

Further, in the register system 10 of the present embodiment, the banknotes stored in the banknote depositing and dispensing machine 24 of the base unit 20 is under management authority of a bank. Note that the present invention is not limited to such an embodiment, and the banknotes stored in the banknote depositing and dispensing machine 24 of the base unit 20 may be under the control of authority of a store instead of a bank.

Note that the register system 10 according to the present embodiment is not limited to the above-described embodiment, and various modifications can be added.

In the above-described embodiment, only the banknote depositing and dispensing machine 24 of the base unit 20 functions as an ATM of bank. However, the coin depositing and dispensing machine 26 of the base unit 20 may also function as an ATM. In this case, the storing and feeding mechanisms 250 in the coin depositing and dispensing machine 26 of the base unit 20 are arranged in the safe, an interior of which can be accessed only by a person having specific authority, and the security of the coins stored in the coin depositing and dispensing machine 26 is enhanced. Further, in this case, the coins stored in the coin depositing and dispensing machine 26 are also under management authority of a bank, similarly to the banknotes stored in the banknote depositing and dispensing machine 24.

Further, in the register system 10 of the present embodiment, installation of the balance management terminal 50 can be omitted. In this case, the base POS register 22 of the base unit 20 manages the balance of the money settlement device 28 of the base unit 20 and the balance of the money settlement device 38 of the terminal unit 30.

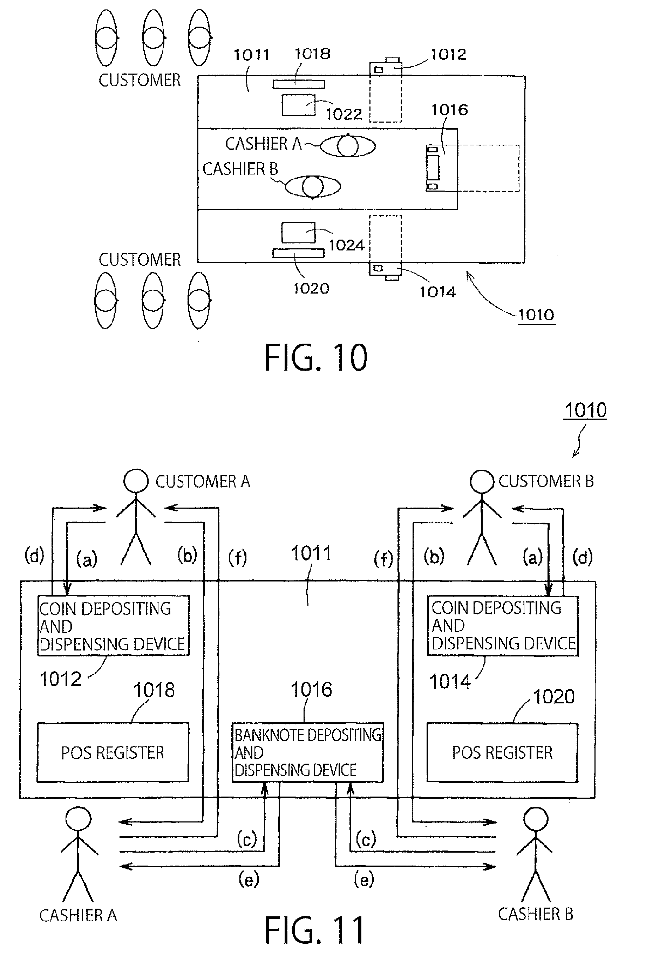

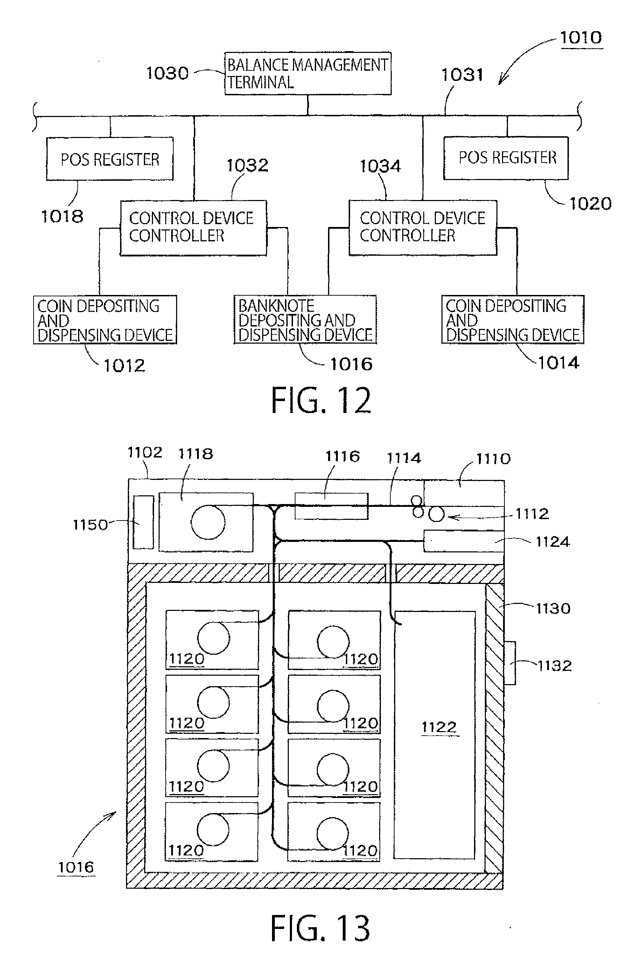

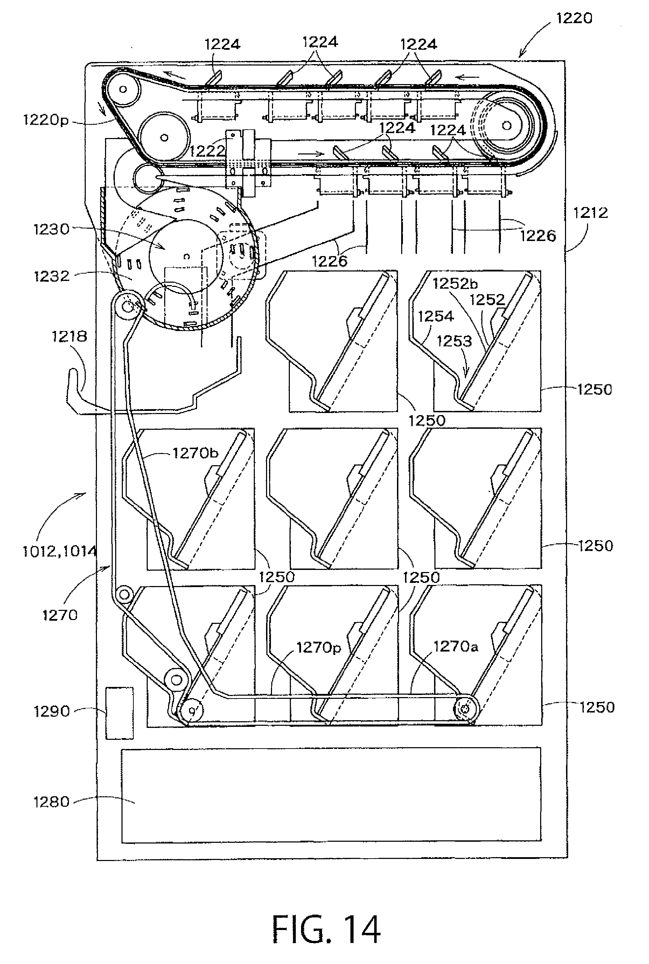

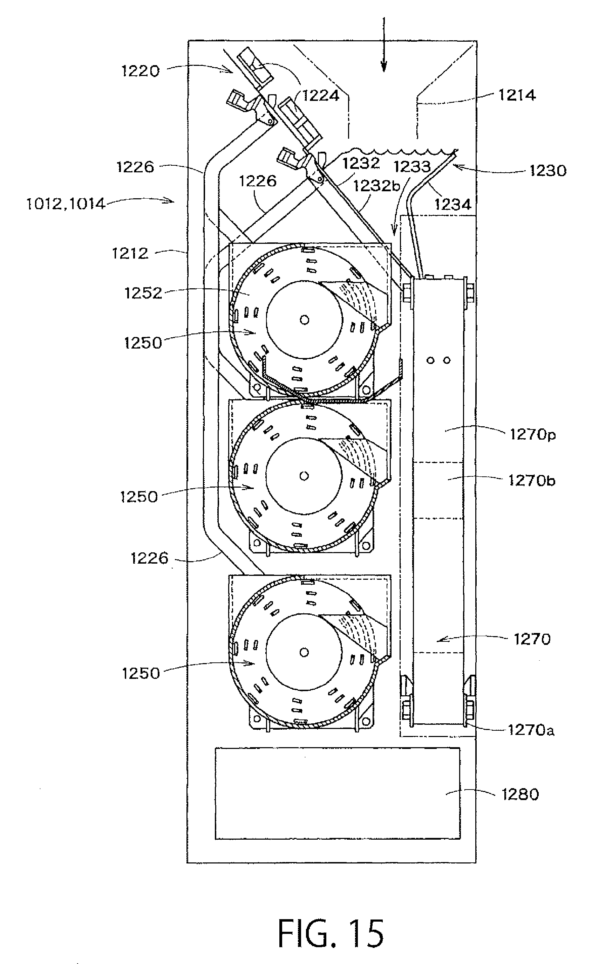

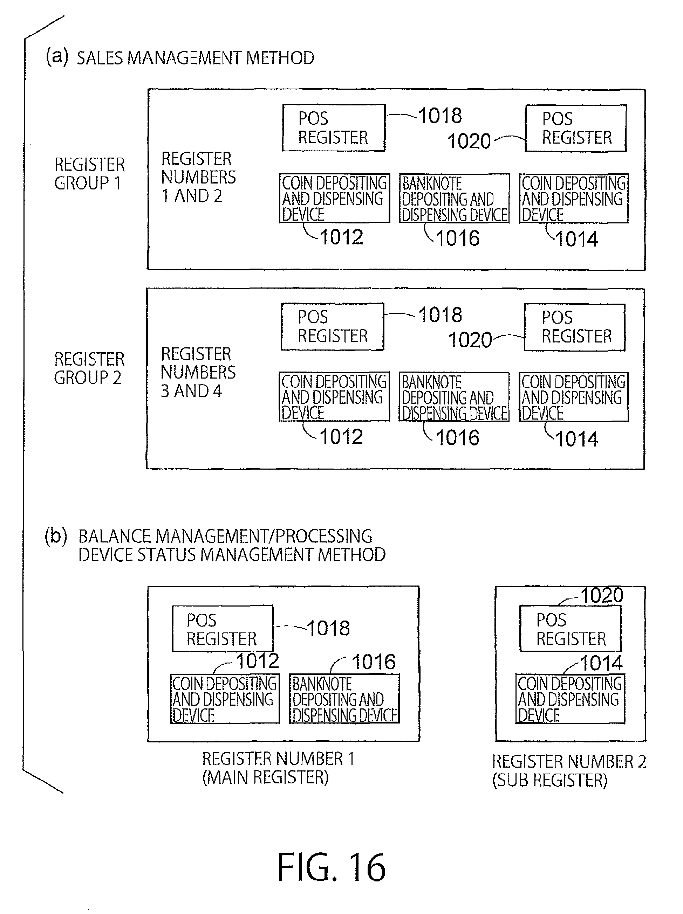

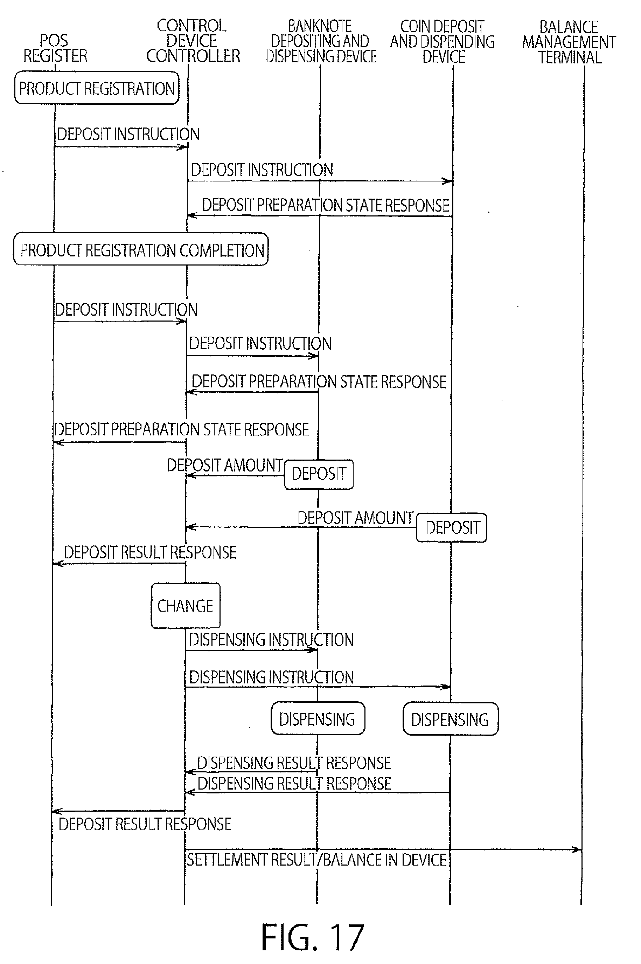

Hereinafter, a next embodiment of the present invention will be described with reference to the drawings. Figs. 10 to 17 are diagrams illustrating a register system according to the present embodiment. Among the diagrams, Fig. 10 is a top view illustrating an outline of a configuration of the register system according to the present embodiment, Fig. 11 is an explanatory diagram illustrating movement of banknotes and coins in the register system illustrated in Fig. 10, and Fig. 12 is a schematic functional block diagram of the register system illustrated in Fig. 10, and the like. Further, Fig. 13 is a side view illustrating an internal configuration of a banknotes depositing and dispensing device provided in the register system illustrated in Fig. 10, and the like, and Figs. 14 and 15 are a side view and a front view illustrating an internal configuration of a coin depositing and dispensing device provided in the register system illustrated in Fig. 10, and the like. Further, Figs. 16(a) and 16(b) are diagrams for describing a mechanism of balance management of the depositing and dispensing devices by a balance management terminal in the register system illustrated in Fig. 10, and the like, and Fig. 17 is a sequence diagram in ordinary business in the register system illustrated in Fig. 10, and the like.

A register system 1010 according to the present embodiment is installed in a settlement place where banknotes and coins are exchanged between a cashier (clerk) and a customer, in a store of retail business such as a department store, a supermarket, or a convenience store. To be specific, when the customer performs settlement of a product in the register system 1010 according to the present embodiment, the customer hands over products to the cashier, the cashier scans the products by a scanner, and confirms a total amount of the products, and the customer then gives the cashier banknotes and coins, and receives change that is an amount of difference between the amount paid by the customer and the total amount.

As illustrated in Fig. 10, the register system 1010 of the present embodiment includes a U-shaped counter 1011, and two coin depositing and dispensing devices 1012 and 1014, and one banknote depositing and dispensing device 1016 are provided in the counter 1011. Further, on the counter 1011, POS registers 1018 and 1020 are respectively provided in the vicinities of the coin depositing and dispensing devices 1012 and 1014, and scanners 1022 and 1024 are respectively provided in the vicinities of the POS registers 1018 and 1020. These scanners 1022 and 1024 are respectively communicably connected to the POS registers 1018 and 1020, and product information scanned by the scanners 1022 and 1024 are respectively sent to the POS registers 1018 and 1020.

In the register system 1010 as illustrated in Fig. 10, two cashiers A and B enter an inside of the U-shaped counter 1011. The two cashiers A and B respectively operate corresponding POS registers 1018 and 1020. Here, the coin depositing and dispensing device 1012 and the scanner 1022 are used by the cashier A, and the coin depositing and dispensing device 1014 and the scanner 1024 are used by the cashier B. Further, the banknote depositing and dispensing device 1016 is used by the two cashiers A and B in common. As illustrated in Fig. 10, the two coin depositing and dispensing devices 1012 and 1014 respectively face outsides of the U-shaped counter 1011, that is, sides of the customers. Meanwhile, the banknote depositing and dispensing device 1016 faces an inside of the U-shaped counter 1011, that is, a side of the cashiers A and B. Further, in the register system 1010 as illustrated in Fig. 10, the customers who perform settlement of the products line up in two lines on the left hand side of Fig. 10.

In the register system 1010 as illustrated in Fig. 10, the two coin depositing and dispensing devices 1012 and 1014 are a semi-self system. That is, after the cashiers A and B scan the products by the scanners 1022 and 1024, the customers deposit the coins in the coin depositing and dispensing devices 1012 and 1014 by themselves, and take out the coins dispensed from the coin depositing and dispensing devices 1012 and 1014 by themselves as change. Meanwhile, the banknote depositing and dispensing device 1016, the POS registers 1018 and 1020, and the scanners 1022 and 1024 are operated by the cashiers A and B.

Next, movement of the banknotes and the coins in the register system 1010 illustrated in Fig. 10 will be described with reference to Fig. 11. In the description below, operations of the customer A and the cashier A in Fig. 11 will be mainly described. However, operations of the customer B and the cashier B are similar. The customer A hands over the products to be settled to the cashier A in the register system 1010, and the cashier A scans the products by the scanner 1022. Product information scanned by the scanner 1022 is sent to the POS register 1018, and the total amount of the products is displayed on a display screen (not illustrated) of the POS register 1018. Following that, the customer A directly deposits the coins in the coin depositing and dispensing device 1012 (see (a) of Fig. 11), and hands over the banknotes to the cashier A (see (b) of Fig. 11). The cashier A deposits the banknotes handed over from the customer A in the banknote depositing and dispensing device 1016 (see (c) of Fig. 11).

Following that, the POS register 1018 calculates change based on the coins and the banknotes deposited in the coin depositing and dispensing device 1012 and the banknote depositing and dispensing device 1016. Then, the coins and the banknotes are respectively dispensed from the coin depositing and dispensing device 1012 and the banknote depositing and dispensing device 1016 as the change. The coins dispensed from the coin depositing and dispensing device 1012 are taken out by the customer A by him/herself (see (d) of Fig. 11). The banknotes dispensed from the banknote depositing and dispensing device 1016 is taken out by the cashier A (see (e) of Fig. 11), and the cashier A then hands over the banknotes to the customer A (see (f) of Fig. 11). In this way, an operation of a series of the settlement process performed between the customer A and the cashier A is completed.

Fig. 12 is a schematic functional block diagram of the register system illustrated in Fig. 10, and the like. As illustrated in Fig. 12, a balance management terminal 1030 is provided in the register system 1010, and the POS registers 1018 and 1020 are communicably connected to the balance management terminal 1030 through a LAN 1031. Further, in the register system 1010, control device controllers 1032 and 1034 are provided corresponding to the POS registers 1018 and 1020, respectively, and these control device controllers 1032 and 1034 are communicably connected to the balance management terminal 1030, and the corresponding POS registers 1018 and 1020 through the LAN 1031, respectively. Further, the coin depositing and dispensing devices 1012 and 1014 are communicably connected to the corresponding control device controllers 1032 and 1034, respectively. Meanwhile, the banknote depositing and dispensing device 1016 is communicably connected to both the control device controllers 1032 and 1034.

The balance management terminal 1030 manages proceeds of each transaction calculated by the POS register 1018 or 1020, the balance of the banknote depositing and dispensing device 1016, and the balances of the coin depositing and dispensing devices 1012 and 1014. Details of the balance management mechanism by the balance management terminal 1030 will be described below.

Next, details of a configuration of the banknote depositing and dispensing device 1016 will be described with reference to Fig. 13. As illustrated in Fig. 13, a deposit port 1110 and a dispensing port 1124 are provided on a front surface (a side surface of the right side in Fig. 13) of a housing 1102 of the banknote depositing and dispensing device 1016. Further, a banknote feeding mechanism 1112 is provided to the deposit port 1110, and the banknotes put in the deposit port 1110 in a stacked state is fed into the housing 1102 one by one by the banknote feeding mechanism 1112. Further, a transport unit 1114 is provided inside the housing 1102 of the banknote depositing and dispensing device 1016, and the transport unit 1114 conveys the banknotes fed by the banknote feeding mechanism 1112 into the housing 1102 one by one. An recognition unit 1116 is provided in the transport unit 1114, and denomination, genuineness, and the like of the banknotes fed by the banknote feeding mechanism 1112 into the housing 1102 is identified by the recognition unit 1116. Further, a escrow unit 1118 is connected to the transport unit 1114, and the banknotes identified by the recognition unit 1116 are temporarily reserved in the escrow unit 1118. When an instruction of deposit confirmation is given to a control unit 1150 described below, the banknotes temporarily reserved in the escrow unit 1118 is stored in storing units by denomination 1120 by denomination. Meanwhile, a return instruction is given to the control unit 1150 described below after the banknotes are temporarily reserved in the escrow unit 1118, the banknotes temporarily reserved in the escrow unit 1118 is sent to the dispensing port 1124 and returned outside the housing 1102.

Further, a safe 1130 is installed in a lower portion of the housing 1102 of the banknote depositing and dispensing device 1016, and a plurality of (to be specific, for example, eight) storing units by denomination 1120 is provided inside the safe 1130. The transport unit 1114 is connected to the storing units by denomination 1120, and the banknotes are conveyed from the transport unit 1114 to the storing units by denomination 1120 by denomination, and is housed in the storing units by denomination 1120. Further, the banknotes stored in the storing units by denomination 1120 can be fed to the transport unit 1114. Further, a collection cassette 1122 is provided in the safe 1130, and the transport unit 1114 is connected to the collection cassette 1122. Further, when the banknotes are sent from the transport unit 1114 to the collection cassette 1122, the banknotes are accumulated in the collection cassette 1122. A dial lock 1132 is provided to the safe 1130, and only a person having specific authority such as a security guard of a security company operates the dial lock 1132 and can open the safe 1130. When the safe 1130 is opened, the person having specific authority collects the banknotes in the collection cassette 1122 together with the collection cassette 1122.

Further, the transport unit 1114 is connected to the dispensing port 1124, and when the dispensing process of the banknotes are performed, the banknotes fed from the storing units by denomination 1120 to the transport unit 1114 are sent to the dispensing port 1124 by the transport unit 1114. Further, the dispensing port 1124 also functions as a reject port, and when the deposit process of the banknotes are performed, a banknote that cannot be identified by the recognition unit 1116 or a rejected note identified that it is not a genuine note by the reject recognition unit 1116 is sent by the transport unit 1114 to the dispensing port 1124.

Further, the control unit 1150 is provided in the housing 1102 of the banknote depositing and dispensing device 1016. The control unit 1150 controls configuration elements of the banknote depositing and dispensing device 1016. Further, information regarding an recognition result of the banknote by the recognition unit 1116 is sent to the control unit 1150. Further, an interface (not illustrated) is provided in the control unit 1150, and the control unit 1150 can perform transmission/reception of signals with the control device controllers 1032 and 1034 through the interface.

Next, details of a configuration of the coin depositing and dispensing devices 1012 and 1014 will be described with reference to Figs. 14 and 15. Here, Fig. 14 is a side view illustrating an internal configuration of the coin depositing and dispensing devices 1012 and 1014, and Fig. 15 is a front view of the coin depositing and dispensing devices 1012 and 1014 illustrated in Fig. 14.

As illustrated in Figs. 14 and 15, the coin depositing and dispensing devices 1012 and 1014 include a housing 1212 having an approximately rectangular parallelepiped shape, a coin receiving port 1214 that receives the coins from an outside of the housing 1212 (see Fig. 15), and a reserving and feeding mechanism 1230 in which the coins received through the coin receiving port 1214 is sent and reserved, and which sends out the reserved coins one by one. The reserving and feeding mechanism 1230 includes a rotating disk 1232 inclined at a predetermined with respect to the vertical direction and rotated in an inclined attitude, and a cover member 1234 that forms a coin reserving space 1233 that reserves the coins between the cover member 1234 and a surface 1232b of the rotating disk 1232.

Further, a deposit transport unit 1220 that conveys the coins fed from the reserving and feeding mechanism 1230 one by one is provided in the housing 1212, and an recognition unit 1222 that identifies the coins conveyed by the deposit transport unit 1220 is provided in the deposit transport unit 1220. An endless belt 1220p is provided in the deposit transport unit 1220. The endless belt 1220p is stretched over a plurality of pulleys, and the endless belt 1220p is circularly moved by a motor attached to one pulley in a counter clockwise direction of Fig. 14. Further, a plurality of protrusion members (not illustrated) is provided on the endless belt 1220p at even intervals, and one coin is hooked by one protrusion member, so that the coins are conveyed on the transport surface one by one.

Further, a plurality of (to be specific, eight) storing and feeding mechanisms 1250 is provided below the deposit transport unit 1220 in the housing 1212. The coins are sent and stored in the storing and feeding mechanisms 1250 from the deposit transport unit 1220 by a sorting unit 1224 provided in the deposit transport unit 1220 through a chute 1226 based on an recognition result of the coins by the recognition unit 1222. Further, each storing and feeding mechanism 1250 sends out the coins stored in the storing and feeding mechanism 1250 one by one. To be specific, each storing and feeding mechanism 1250 includes a rotating disk 1252 inclined at a predetermined angle with respect to the vertical direction, and rotated in an inclined attitude, and a cover member 1254 that forms a coin storing unit space 1253 that stores the coins between the cover member 1254 and a surface 1252b of the rotating disk 1252.

Further, a coin ejection port 1218 that ejects the coins outside the housing 1212 is provided in the coin depositing and dispensing devices 1012 and 1014, and a dispensing transport unit 1270 that conveys the coins fed from the storing and feeding mechanisms 1250 to the coin ejection port 1218 is provided in the housing 1212. The dispensing transport unit 1270 includes a first dispensing transporting portion 1270a provided below the storing and feeding mechanisms 1250 and extending in an approximately horizontal direction, and a second dispensing transporting portion 1270b that conveys the coins sent from the first dispensing transporting portion 1270a to the coin ejection port 1218. Further, the dispensing transport unit 1270 is configured from an endless belt 1270p stretched over a plurality of pulleys. The endless belt 1270p is circularly moved by a motor attached to one pulley in both the clockwise direction and the counter clockwise direction in Fig. 14. A plurality of protrusion members (not illustrated) is provided on the endless belt 1270p at even intervals, and one or more coins are hooked by one protrusion member, so that the coins are conveyed by the endless belt 1270p more than one at a time.

Further, a collection box 1280 is provided below the dispensing transport unit 1270 in the housing 1212. The collection box 1280 is provided in the housing 1212 in a freely detachable manner. Further, the coins for collection are sent from the first dispensing transporting portion 1270a in the dispensing transport unit 1270 to the collection box 1280. Then, after the coins are stored in the collection box 1280, the operator can collect the coins together with the collection box 1280 by taking out the collection box 1280 of the housing 1212.

Further, a control unit 1290 (see Fig. 14) is provided in the housing 1212 of the coin depositing and dispensing devices 1012 and 1014. The control unit 1290 controls configuration elements of the coin depositing and dispensing devices 1012 and 1014. Further, information regarding recognition results of the coins by the recognition unit 1222 is sent to the control unit 1290. Further, an interface (not illustrated) is provided in the control unit 1290, and the control unit 1290 can perform transmission/reception of signals with the control device controllers 1032 and 1034 through the interface.

In the register system 1010 of the present embodiment, the banknote depositing and dispensing device 1016 is used by a plurality of (to be specific, two) POS registers 1018 and 1020 in common as illustrated in Figs. 10 and 11. The banknote depositing and dispensing device 1016 is brought in an occupation state exclusively by each of the POS registers 1018 and 1020. Only after proceeds of one transaction is confirmed by one POS register (for example, by the POS register 1018), the register 1018 can cause the banknote depositing and dispensing device 1016 to be in the occupation state. Here, "confirmation of proceeds of one transaction" means providing an instruction of confirmation to a control unit (not illustrated) of the POS register 1018 by the cashier A or the customer A with an operation unit (not illustrated) of the POS register 1018 when, for example, the cashier A scans products by the scanner 1022, and then a total amount of the products is displayed on a display screen (not illustrated) of the POS register 1018.

To be specific, when the display screen of the POS register 1018 is a touch panel, by pressing a "confirmation" button displayed on the touch panel by the cashier A or the customer A, the "confirmation of proceeds of one transaction" is given to the control unit (not illustrated) of the POS register 1018. Note that, even if the "confirmation button" displayed on the touch panel of POS register 1018 is pressed after the products are scanned by one POS register (for example, by the POS register 1018), when the banknote depositing and dispensing device 1016 has already been in the occupation state by another POS register 1020, "please wait a moment" is displayed on the display screen of the one POS register 1018. In this case, after the occupation state of the banknote depositing and dispensing device 1016 by the another POS register 1020 is cancelled, specifically, after the coins and the banknotes are dispensed from the coin depositing and dispensing device 1014 and the banknote depositing and dispensing device 1016 as change, the banknote depositing and dispensing device 1016 can be made in the occupation state by the one POS register 1018.

Next, a balance management mechanism of the coin depositing and dispensing devices 1012 and 1014, and the banknote depositing and dispensing device 1016 by the balance management terminal 1030 as illustrated in Fig, 12 will be described with reference to Figs. 16(a) and 16(b).

As illustrated in Fig. 16(a), in a sales management method of managing proceeds of each transaction, the proceeds of each transaction is managed for each register group. Here, the register group is formed for each counter 1011, as illustrated in Fig. 10. That is, as illustrated in Figs. 10 and Fig. 16(a), one register group includes the two POS registers 1018 and 1020, the two coin depositing and dispensing devices 1012 and 1014, and the one banknote depositing and dispensing device 1016. Further, register numbers are set corresponding to the POS registers 1018 and 1020. Therefore, as illustrated in Fig. 16(a), two register numbers 1 and 2 are set to a register group 1, and two another register numbers 3 and 4 are set to a register group 2. In the present embodiment, the banknote depositing and dispensing device 1016 is used by the two POS registers 1018 and 1020 in common. Therefore, it is unclear which register number 1 or 2 the banknote deposited in the banknote depositing and dispensing device 1016 and stored in the storing units by denomination 1120 belongs to, and thus the proceeds of each transaction cannot be managed for each register number. Therefore, as described above, the two POS registers 1018 and 1020, the two coin depositing and dispensing devices 1012 and 1014, and the one banknote depositing and dispensing device 1016 form one register group, and the balance management terminal 1030 manages the proceeds of each transaction for each register group. At this time, the balance management terminal 1030 compares the proceeds of each transaction calculated by the POS registers 1018 and 1020 and the total amount of the coins and the banknotes deposited in the coin depositing and dispensing devices 1012 and 1014 and the banknote depositing and dispensing device 1016 as proceeds based on the product information scanned by the scanners 1022 and 1024, and confirms whether both proceeds accord with each other.

Meanwhile, as illustrated in Fig. 16(b), the balance management that manages the balances of the coin depositing and dispensing devices 1012 and 1014 and the balance of the banknote depositing and dispensing device 1016, and a device status management that manages the statuses of the coin depositing and dispensing devices 1012 and 1014, and the status of the banknote depositing and dispensing device 1016 are performed for each register number. At this time, the banknote depositing and dispensing device 1016 is associated with one of the two POS registers 1018 and 1020. Then, the POS register (register number 1) associated with the banknote depositing and dispensing device 1016 is treated as a main register, and the POS register (register number 2) not associated with the banknote depositing and dispensing device 1016 is treated as a sub register. Note that examples of the statuses of the coin depositing and dispensing devices 1012 and 1014, and the banknote depositing and dispensing device 1016 include empty, near empty, near full, full, error, online, offline, and the like.

Further, the balance management terminal 1030 manages the balances of the coin depositing and dispensing devices 1012 and 1014, and the banknote depositing and dispensing device 1016, and the statuses of the coin depositing and dispensing devices 1012 and 1014, and the banknote depositing and dispensing device 1016, for each register number. To be specific, the balance management terminal 1030 causes only one of the plurality of POS registers 1018 and 1020 (the POS register of the main register side) to manage the balance and the status of the banknote depositing and dispensing device 1016.

Next, a sequence in ordinary business in the register system 1010 illustrated in Fig. 10, and the like will be described with reference to Fig. 17. Here, operations of the customer A and the cashier A in Fig. 11 will be mainly described. However, operations of the customer B and the cashier B are similar. First, when the customer A hands over products to be settled to the cashier A, and the cashier A scans the products by the scanner 1022, product registration is performed in the POS register 1018, and a total amount of the products is displayed on a display screen (not illustrated) of the POS register 1018. At this time, the POS register 1018 transmits a deposit instruction to the coin depositing and dispensing device 1012 through the control device controller 1032. When having received the deposit instruction from the POS register 1018, the coin depositing and dispensing device 1012 transmits a deposit preparation state response to the control device controller 1032. Then, when the display screen of the POS register 1018 is a touch panel, and the cashier A or the customer A presses the "confirmation" button displayed on the touch panel, the "confirmation of proceeds of one transaction" is given to the control unit (not illustrated) of the POS register 1018, and the product registration in the POS register 1018 is completed.

When the product registration is completed, the banknote depositing and dispensing device 1016 becomes in the occupation state of the POS register 1018. At this time, the POS register 1018 transmits a deposit instruction to the banknote depositing and dispensing device 1016 through the control device controller 1032. When having received the deposit instruction from the POS register 1018, the banknote depositing and dispensing device 1016 transmits a deposit preparation state response to the POS register 1018 through the control device controller 1032. Following that, when the banknotes are deposited by the cashier A in the banknote depositing and dispensing device 1016, the information regarding the deposit amount of the banknotes are transmitted from the banknote depositing and dispensing device 1016 to the control device controller 1032. Further, when the coins are deposited by the customer A to the coin depositing and dispensing device 1012, the information regarding the deposit amount of the coins is transmitted from the coin depositing and dispensing device 1012 to the control device controller 1032. Then, a deposit result response is transmitted from the control device controller 1032 to the POS register 1018.

Following that, the banknotes and/or coins of an amount obtained by subtracting the total amount of the products from the total deposit amount is dispensed from the coin depositing and dispensing device 1012 and/or the banknote depositing and dispensing device 1016 as change. To be specific, the control device controller 1032 transmits a dispensing instruction to the coin depositing and dispensing device 1012 and/or the banknote depositing and dispensing device 1016, and when the coins and/or banknotes are dispensed from the coin depositing and dispensing device 1012 and/or the banknote depositing and dispensing device 1016, the coin depositing and dispensing device 1012 and the banknote depositing and dispensing device 1016 transmits a dispensing result response to the POS register 1018 through the control device controller 1032. Following that, the control device controller 1032 transmits a settlement result, and the balances of the coin depositing and dispensing device 1012 and the banknote depositing and dispensing device 1016 to the balance management terminal 1030. In this way, the sequence of one transaction in ordinary business is completed.

As described above, according to the register system 1010 of the present embodiment, a plurality of (to be specific, for example, two) coin depositing and dispensing devices 1012 and 1014 is provided corresponding to the POS registers 1018 and 1020, and a smaller number of banknote depositing and dispensing devices 1016 than the number of the POS registers 1018 and 1020 is installed so as to be used by the POS registers 1018 and 1020 in common. Therefore, the number of installed banknote depositing and dispensing device can be decreased, and thus the cost of introduction of the register system 1010 can be reduced, compared with the case in which the banknote depositing and dispensing devices are arranged in one-to-one correspondence with all of the POS registers 1018 and 1020. Especially, there is a problem in that, while the coin depositing and dispensing devices 1012 and 1014 are relatively cheap but have low security, the banknote depositing and dispensing device 1016 has high security but costs high because the storing units by denomination 1120 and the like are provided inside the safe 1130. Therefore, by decreasing the number of installed banknote depositing and dispensing devices 1016 that are relatively expensive, the cost as the entire register system 1010 can be substantially reduced.

In the register system 1010 of the present embodiment, only one banknote depositing and dispensing device 1016 is installed in the register system 1010. However, the present embodiment is not limited to the example. A plurality of banknote depositing and dispensing devices may be employed as long as the condition that the number of banknote depositing and dispensing devices is smaller than the number of POS registers can be satisfied. To be specific, according to the register system of the present invention, two banknote depositing and dispensing devices are installed, and three POS registers may be installed.

Further, in the register system 1010 of the present embodiment, the coin depositing and dispensing devices 1012 and 1014 are arranged facing the customer sides, and the banknote depositing and dispensing device 1016 is arranged facing the cashier (clerk) side. However, the present embodiment is not limited to the example. In a register system having another configuration in the present embodiment, all of the coin depositing and dispensing devices 1012 and 1014, and the banknote depositing and dispensing device 1016 may be arranged facing the cashier (clerk) sides.

Further, in the register system 1010 of the present embodiment, the banknote depositing and dispensing device 1016 includes a plurality of storing units by denomination 1120 that stores the banknotes taken from an outside of the housing 1102 to an inside by the deposit process, and the storing units by denomination 1120 are arranged inside the safe 1130, an interior of which can be accessed only by a person having specific authority such as a security guard of a security company. This enhances the security of the banknote depositing and dispensing device 1016.

Further, in the register system 1010 of the present embodiment, the banknote depositing and dispensing device 1016 is made in the occupation state exclusively by each of the POS registers 1018 and 1020, and only after the proceeds of one transaction is confirmed in one POS register, the occupation state can be made by the one POS register.

Further, in the register system 1010 of the present embodiment, the balance management terminal 1030 communicably connected with the POS registers 1018 and 1020, the banknote depositing and dispensing device 1016, and the coin depositing and dispensing devices 1012 and 1014 is provided. The balance management terminal 1030 manages the proceeds of the transactions calculated by the POS registers 1018 and 1020, the balance of the banknote depositing and dispensing device 1016, and the balances of the coin depositing and dispensing devices 1012 and 1014.

Here, the balance management terminal 1030 manages the proceeds of the transactions calculated by the POS registers 1018 and 1020, treating the plurality of POS registers 1018 and 1020 that commonly uses the banknote depositing and dispensing device 1016 and the plurality of coin depositing and dispensing devices 1012 and 1014 provided corresponding to the POS registers 1018 and 1020 as one group (for example, as the register group 1 in Fig. 16(a)). Further, the balance management terminal 1030 causes only one of the plurality of POS registers 1018 and 1020 to manage the balance and/or status of the banknote depositing and dispensing device 1016, as illustrated in Fig. 16(b).

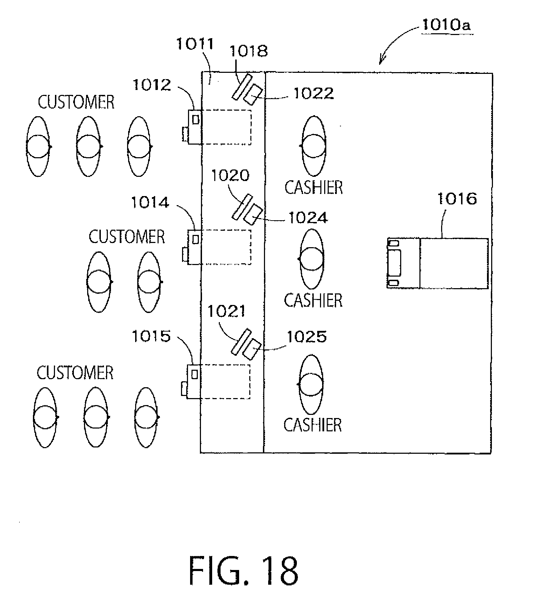

Note that the register system according to the present embodiment is not limited to the above-described embodiment, and various modifications can be added. Fig. 18 illustrates an outline of another configuration of the register system according to the present embodiment.

As illustrated in Fig. 18, in a register system 1010a according to a modification, a linearly extending counter 1011 is provided, and three coin depositing and dispensing devices 1012, 1014, and 1015 are provided in the counter 1011. These three coin depositing and dispensing devices 1012, 1014, and 1015 face a left side of the counter 1011 in Fig. 18, that is, a side of customers. Further, POS registers 1018, 1020, and 1021 are respectively provided in the vicinities of the coin depositing and dispensing devices 1012, 1014, and 1015 on the counter 1011, and scanners 1022, 1024, and 1025 are respectively provided in the vicinities of the POS registers 1018, 1020, and 1021. These scanners 1022, 1024, and 1025 are respectively communicably connected to the POS registers 1018, 1020, and 1021, and product information scanned by the scanners 1022, 1024, and 1025 are respectively sent to the POS registers 1018, 1020, and 1021. Meanwhile, in the register system 1010a, one banknote depositing and dispensing device 1016 is provided. The banknote depositing and dispensing device 1016 is arranged on a right side of the counter 1011 illustrated in Fig. 18, and behind cashiers who operate the POS registers 1018, 1020, and 1021. The banknote depositing and dispensing device 1016 is used by three cashiers in common. Note that, in the register system 1010a according to the modification, customers who perform settlement of products line up in three lines on the left hand side of Fig. 18.

In the register system 1010a as illustrated in Fig. 18, the three coin depositing and dispensing devices 1012, 1014, and 1015 are a semi-self system. That is, after the cashiers scans products by the scanners 1022, 1024, and 1025, the customers deposit coins in the coin depositing and dispensing devices 1012, 1014, and 1015 by themselves, and take out coins dispensed from the coin depositing and dispensing devices 1012, 1014, and 1015 as change by themselves. Meanwhile, the banknote depositing and dispensing device 1016, the POS registers 1018, 1020, and 1021, and the scanners 1022, 1024, and 1025 are operated by the cashiers.

Next, movements of the banknotes and the coins in the register system 1010a illustrated in Fig. 18 will be described. Here, an operation in which the settlement process is performed in the POS register 1018 will be mainly described. However, an operation in which the settlement process is performed by the POS registers 1020 and 1021 is similar. The customer first hands over products to be settled to the cashier in the register system 1010a, and the cashier scans the products by the scanner 1022. Product information scanned by the scanner 1022 is sent to the POS register 1018, a total amount of the products is displayed on a display screen (not illustrated) of the POS register 1018. Following that, the customer directly deposits the coins in the coin depositing and dispensing device 1012, and hands over the banknotes to the cashier. The cashier deposits the banknotes handed over from the customer in the banknote depositing and dispensing device 1016 behind the cashier.

Following that, the POS register 1018 calculates the change based on the total deposit amount of the coins and the banknotes deposited in the coin depositing and dispensing device 1012 and the banknote depositing and dispensing device 1016. Then, the coins and the banknotes are respectively dispensed from the coin depositing and dispensing device 1012 and the banknote depositing and dispensing device 1016. The coins dispensed from the coin depositing and dispensing device 1012 is taken out by the customer him/herself, and the banknotes dispensed from the banknote depositing and dispensing device 1016 is taken out by the cashier, and then the cashier hands over the banknotes to the customer. In this way, a series of an operation of the settlement process performed between the customer and the cashier is completed.

Even in the register system 1010a as illustrated in Fig. 18, a plurality of (to be specific, for example, three) coin depositing and dispensing devices 1012, 1014, and 1015 are provided corresponding to the POS registers 1018, 1020, and 1021, and a smaller number of banknote depositing and dispensing devices 1016 than the number of the POS registers 1018, 1020, and 1021 is installed so as to be commonly used by the plurality of POS registers 1018, 1020, and 1021, similarly to the register system 1010 as illustrated in Figs. 10 to 17. Accordingly, even in the register system 1010a as illustrated in Fig. 18, the number of installed banknote depositing and dispensing devices can be decreased, and thus the cost of introduction of the register system 1010a can be reduced, compared with a case in which the banknote depositing and dispensing devices are arranged in one-to-one correspondence with all of the POS register 1018, 1020, and 1021.

### DESCRIPTION OF THE SIGNS

- 10: Register system
- 20: Base unit
- 22: Base POS register
- 28: Money settlement device
- 30: Terminal unit
- 32: Terminal POS register
- 38: Money settlement device
- 50: Balance management terminal
- 62: ATM network of a bank
- 120: Storing and feeding unit
- 130: Safe
- 1010 and 1010a: Register system
- 1011: Counter
- 1012, 1014, and 1015: Coin depositing and dispensing device
- 1016: Banknote depositing and dispensing device
- 1018, 1020, and 1021: POS register
- 1022, 1024, and 1025: Scanner
- 1030: Balance management terminal
- 1031: LAN
- 1032 and 1034: Control device controller
- 1102: Housing
- 1110: Inlet
- 1112: Banknote feeding mechanism
- 1114: Transport unit
- 1116: Recognition unit
- 1118: Escrow unit
- 1120: Storing unit by denomination
- 1122: Collecting cassette
- 1124: Outlet
- 1130: Safe
- 1132: Dial lock
- 1150: Control unit
- 1212: Housing
- 1214: Coin receiving port
- 1218: Coin ejection port
- 1220: Deposit transport unit
- 1220p: Endless belt
- 1222: Recognition unit
- 1224: Sorting unit
- 1226: Chute
- 1230: Reserving and feeding mechanism
- 1232: Rotating disk
- 1232b: Surface
- 1233: Coins reserving space
- 1234: Cover member
- 1250: Storing and feeding mechanism
- 1252: Rotating disk
- 1252b: Surface
- 1253: Coin storing unit space
- 1254: Cover member
- 1270: Dispensing transport unit
- 1270a: First dispensing transporting portion
- 1270b: Second dispensing transporting portion
- 1270p: Endless belt
- 1280: Collection box
- 1290: Control unit

## Claims

1. A register system in which a plurality of register units including a register and a money settlement device is provided, wherein
the plurality of register units includes a base unit and a terminal unit, and
a money settlement device of the base unit includes a money storing unit arranged in a safe, an interior of which only a person having specific authority is allowed to access.

2. The register system according to claim 1, wherein an amount of money stored in the money settlement device of the base unit is larger than an amount of money stored in a money settlement device of the terminal unit.

3. A register system in which a plurality of register units including a register and a money settlement device is provided, wherein
the plurality of register units includes a base unit and a terminal unit, and
the base unit performs, with respect to the terminal unit, a replenishing process of replenishing money stored in a money settlement device of the base unit to a money settlement device of the terminal unit, and a collecting process of collecting money stored in the money settlement device of the terminal unit and storing the money in the money settlement device of the base unit.

4. The register system according to any one of claims 1 to 3, further comprising
a management device communicably connected to the base unit and the terminal unit, and configured to manage balance of the money settlement device of the base unit and balance of the money settlement device of the terminal unit.

5. The register system according to any one of claims 1 to 4, wherein the base unit is communicably connected to an ATM network of a bank.

6. The register system according to claim 5, wherein, when money is dispensed from the money settlement device of the base unit, dispensing information of the money is transmitted from the base unit to the ATM network of the bank.

7. The register system according to claim 5 or 6, wherein, when the replenishing process of replenishing money stored in the money settlement device of the base unit to the money settlement device of the terminal unit is performed, dispensing information of the money dispensed from the money settlement device of the base unit is transmitted from the base unit to the ATM network of the bank.

8. The register system according to any one of claims 5 to 7, wherein the collecting process of collecting money stored in the money settlement device of the terminal unit and storing the money in the money settlement device of the base unit is performed, deposit information of the money deposited in the money settlement device of the base unit is transmitted to the ATM network of the bank.

9. The register system according to any one of claims 1 to 8, wherein the money deposited in the money settlement device of the base unit is under management authority of a bank.
